(19) Europäisches Patentamt
European Patent Office
Office européen des brevets

(11) EP 2 535 362 A1

# (12) EUROPÄISCHE PATENTANMELDUNG

(43) Veröffentlichungstag:
**19.12.2012 Patentblatt 2012/51**

(21) Anmeldenummer: **11170375.7**

(22) Anmeldetag: **17.06.2011**

(51) Int Cl.:
***C08F 216/14*** *(2006.01)* ***C08F 220/06*** *(2006.01)*
***C08F 222/06*** *(2006.01)* ***C04B 24/26*** *(2006.01)*
***C08F 220/36*** *(2006.01)* ***C07C 57/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sika Technology AG**
**6340 Baar (CH)**

(72) Erfinder:
- **Flatt, Robert**
**8706 Feldmeilen (CH)**
- **Eberhardt, Arnd**
**8400 Winterthur (CH)**
- **Marchon, Delphine**
**1630 Bulle (CH)**
- **Sulser, Ueli**
**8103 Unterengstringen (CH)**

(74) Vertreter: **Sika Patent Attorneys**
**c/o Sika Technologies AG**
**Tüffenwies 16-22**
**8048 Zürich (CH)**

## (54) Kammpolymere als Dispergiermittel für alkalisch aktivierte Bindemittel

(57) Die Erfindung betrifft die Verwendung eines Kammpolymers **KP** als Dispergiermittel in einer Bindemittelzusammensetzung enthaltend ein alkalisches Aktivierungsmittel, wobei das Aktivierungsmittel insbesondere zur Aktivierung eines latent hydraulischen und/oder puzzolanischen Bindemittels vorgesehen ist, und wobei das Kammpolymer **KP** über ein aus mehreren Rückgratmonomeren aufgebautes Polymerrückgrat und mehrere daran gebundene und jeweils aus mehreren Seitenkettenmonomeren aufgebaute polymere Seitenketten verfügt, und wobei wenigstens ein Teil der Rückgratmonomere eine oder mehrere ionisierbare Gruppen aufweist, und zeichnet sich dadurch aus, dass eine Strukturkonstante *K* des Kammpolymers **KP**, welche definiert ist als

$$K = \frac{[(N-1)z]^2}{nP^{9/5}N^{3/5}} \times 10^5 ,$$

wenigstens gleich 70 ist, wobei
n
die durchschnittliche Anzahl von Seitenketten pro Kammpolymermolekül angibt,
N
für die durchschnittliche Anzahl von Rückgratmonomeren pro Seitenkette steht und
P
die durchschnittliche Anzahl von Seitenkettenmonomeren pro Seitenkette angibt, und
z
die durchschnittliche Anzahl an ionisierbaren Gruppen pro Seitenkettenfreiem Rückgratmonomer darstellt.

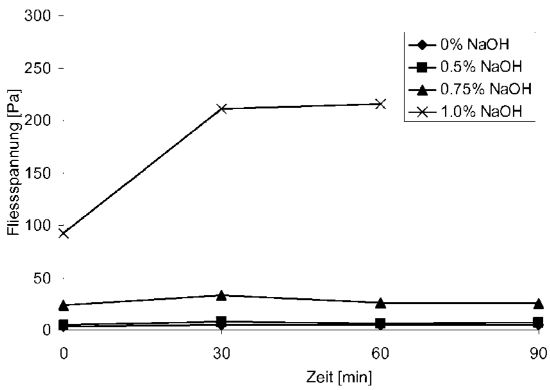


Fig. 3

EP 2 535 362 A1

## Beschreibung

### Technisches Gebiet

Die Erfindung betrifft die Verwendung eines Kammpolymers als Dispergiermittel in einer Bindemittelzusammensetzung enthaltend ein alkalisches Aktivierungsmittel. Weiter bezieht sich die Erfindung auf eine Bindemittelzusammensetzung sowie ein Verfahren zu deren Herstellung. Ein weiterer Aspekt der Erfindung betrifft einen Formkörper, erhältlich aus einer Bindemittelzusammensetzung.

### Stand der Technik

Die Herstellung von Zement generiert eine beträchtliche Menge an klimarelevantem $CO_2$. Um die $CO_2$-Emissonen zu reduzieren, kann Zement in Bindemittelzusammensetzungen teilweise durch latent hydraulische und/oder puzzolanische Zementzusatzstoffe wie z.B. Flugaschen, Schlacken oder Silicastaub ersetzt werden. Derartige Zusatzstoffe entstehen als Nebenprodukte in verschiedenen Industrieprozessen und sind daher in Bezug auf die $CO_2$-Bilanz vorteilhaft. Jedoch benötigt das Abbinden solcher Zementzusatzstoffe ohne zusätzliche Massnahmen deutlich länger als bei hydraulischem Zement. Dies ist insbesondere im Hinblick auf hohe Frühfestigkeiten von Bindemittelzusammensetzungen nachteilig. Es ist jedoch möglich, latent hydraulische und puzzolanische Zusatzstoffe beispielsweise durch alkalische bzw. basische Aktivierungsmittel zu aktivieren.

Um die Verarbeitbarkeit von zementösen Bindemittelzusammensetzungen bei möglichst geringem Wasser/Bindemittel-Verhältnis zu verbessern ist es zudem üblich, sogenannte Dispergiermittel als Verflüssiger einzusetzen. Dadurch wird sowohl eine gute Verarbeitbarkeit der flüssigen Bindemittelzusammensetzung als auch hohe mechanischen Festigkeit nach deren Aushärten erreicht. Als besonders effektive Dispergiermittel bekannt sind beispielsweise Kammpolymere auf Polycarboxylatbasis. Solche Kammpolymere verfügen über ein Polymerrückgrat und daran gebunden Seitenketten. Entsprechende Polymere sind z.B. in der EP 1 138 697 A1 (Sika AG) beschrieben.

Wie sich gezeigt hat, sind Kammpolymere auf Polycarboxylatbasis aber im Allgemeinen äusserst empfindlich gegenüber erhöhten basischen Bedingungen. Werden solche Dispergiermittel in Bindemittelzusammensetzungen zusammen mit alkalischen Aktivierungsmitteln eingesetzt, verlieren sie nach kurzer Zeit ihre Wirkung.

Es besteht daher nach wie vor Bedarf nach wirksamen Dispergiermitteln, welche auch in alkalisch aktivierten Bindemittelzusammensetzungen einsetzbar sind.

### Darstellung der Erfindung

Aufgabe der Erfindung ist es daher, Dispergiermittel bereitzustellen, bei welchem die vorstehend genannten Nachteile überwunden werden. Die Dispergiermittel sollen insbesondere in alkalisch aktivierten Bindemittelzusammensetzungen einsetzbar sein und dabei möglichst lange wirksam bleiben.

Überraschenderweise wurde gefunden, dass die erfindungsgemässe Aufgabe durch Verwendung eines Kammpolymers **KP** gemäss Anspruch 1 gelöst werden kann. Das Kammpolymer **KP** zeichnet sich insbesondere dadurch aus, dass eine Strukturkonstante *K*, welche definiert ist als

$$K = \frac{[(N-1)z]^2}{nP^{9/5}N^{3/5}} \times 10^5$$

wenigstens gleich 70 ist, wobei

n  eine durchschnittliche Anzahl von Seitenketten pro Kammpolymermolekül angibt,

N  für die durchschnittliche Anzahl von Rückgratmonomeren pro Seiten kette steht,

P  die durchschnittliche Anzahl von Seitenkettenmonomeren pro Seitenkette angibt und

z  die durchschnittliche Anzahl an ionisierbaren Gruppen pro Seitenkettenfreiem Rückgratmonomer darstellt.

Die Strukturkonstante *K* wird auch als Adsorptionsgleichgewichtskonstante bezeichnet und gibt die theoretische Adsorptionsfähigkeit eines Moleküls auf einer Zementoberfläche an. Je grösser *K*, desto besser ist die Absorptionsfähigkeit.

Nähere Angaben zur Strukturkonstante *K* findet sich in: Flatt R.J., Zimmermann J., Hampel C., Kurz C., Schober I., Plassard C. and Lesniewska E., "The role of adsorption energy in the sulphate-polycarboxylate competition", Proc. 9th ACI Int. Conf. Superplasticizers and Other Chemical Admixtures in Concrete, (editors: Holland, T.C., Gupta, P.R., Malhotra, V.M.), American Concrete Institute, Detroit, SP-262-12 (2009) pp. 153-164.

Wie sich gezeigt hat, sind die erfindungsgemäss verwendeten Kammpolymere **KP** im Vergleich mit anderen Kammpolymeren, welche einen geringeren *K*-Wert aufweisen, gegenüber alkalischen Bedingungen, wie sie z.B. in alkalisch aktivierten Bindemittelzusammensetzungen mit latent hydraulischen und/oder puzzolanischen Bindemitteln vorherrschen, überraschend unempfindlich.

Dies zeigt sich insbesondere darin, dass die Differenz der Fliessfähigkeit von angemachten kammpolymerhaltigen Bindemittelzusammensetzungen mit und ohne alkalische Aktivierungsmittel für latent hydraulische und/oder puzzolanische Bindemittel relativ gering ausfällt.

Somit bleiben die erfindungsgemässen Kammpolymere **KP** als Dispergiermittel oder Verflüssiger selbst in alkalisch aktivierten Bindemittelzusammensetzungen über längere Zeit wirksam und ermöglichen eine gute Verarbeitbarkeit bei geringem Wasser/Zement-Verhältnis.

Die Kammpolymere **KP** lassen sich somit in vorteilhafter Weise speziell zur Verflüssigung, zur Reduktion des Wasserbedarfs und/oder zur Verbesserung der Verarbeitbarkeit von mineralischen Bindemittelzusammensetzungen enthaltend alkalische Aktivierungsmittel verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

## Wege zur Ausführung der Erfindung

Ein erster Aspekt der vorliegenden Erfindung betrifft die Verwendung eines Kammpolymers **KP** als Dispergiermittel in einer Bindemittelzusammensetzung enthaltend ein alkalisches Aktivierungsmittel, wobei das Aktivierungsmittel insbesondere zur Aktivierung eines latent hydraulischen und/oder puzzolanischen Bindemittels vorgesehen oder geeignet ist, und wobei das Kammpolymer **KP** über ein aus mehreren Rückgratmonomeren aufgebautes Polymerrückgrat und mehrere daran gebundene und jeweils aus mehreren Seitenkettenmonomeren aufgebaute polymere Seitenketten verfügt, und wobei wenigstens ein Teil der Rückgratmonomere eine oder mehrere ionisierbare Gruppen aufweist, dadurch gekennzeichnet, dass eine Strukturkonstante K des Kammpolymers **KP**, welche definiert ist als

$$K = \frac{[(N-1)z]^2}{nP^{9/5}N^{3/5}} \times 10^5 ,$$

wenigstens gleich 70 ist, wobei

- n eine durchschnittliche Anzahl von Seitenketten pro Kammpolymermolekül angibt,
- N für die durchschnittliche Anzahl von Rückgratmonomeren pro Seiten kette steht,
- P die durchschnittliche Anzahl von Seitenkettenmonomeren pro Seitenkette angibt, und
- z die durchschnittliche Anzahl an ionisierbaren Gruppen pro Seitenkettenfreiem Rückgratmonomer darstellt.

Bevorzugt ist die Strukturkonstante *K* wenigstens gleich 100, weiter bevorzugt wenigstens gleich 200, noch weiter bevorzugt wenigstens gleich 250.

Bei der durchschnittlichen Anzahl von Rückgratmonomeren pro Seitenkette (N) wird jeweils das Rückgratmonomer, welches die Seitenkette trägt als Rückgratmonomer mitgezählt.

Mit dem Begriff "ionisierbare Gruppen" sind insbesondere funktionelle Gruppen zu verstehen, welche bei einem pH-Wert > 10, insbesondere bei einem pH-Wert > 12, in anionischer Form oder negativ geladen vorliegen. Dies sind insbesondere H-Donor-Gruppen oder Säuregruppen. Besonders bevorzugt sind die ionisierbaren Gruppen Säuregruppen, wie z.B. Carbonsäure-, Sulfonsäure-, Phosphorsäure- und/oder Phosphonsäuregruppen. Bevorzugt sind Carbonsäuregruppen. Die Säuregruppen können auch als Anionen in deprotonierter Form oder als Salz mit einem Gegenion bzw. Kation vorliegen.

Unter der durchschnittlichen Anzahl an ionisierbaren Gruppen pro Seitenkettenfreiem Rückgratmonomer ist insbesondere die Summe aller ionisierbaren Gruppen der Rückgratmonomere dividiert durch die Summe aller Rückgratmonomere, welche keine Seitenkette tragen, zu verstehen. Seitekettenfreie Rückgratmonomere sind demnach diejenigen Rückgratmonomere, welche keine Seitenketten tragen.

Der Begriff "Kammpolymer" umfasst im vorliegenden Zusammenhang allgemein Polymere bestehend aus unterschiedlichen Monomeren im Polymerrückgrat und/oder den polymeren Seitenketten als auch Polymere bestehend aus identischen Monomeren.

So kann im Kammpolymer **KP** das Polymerrückgrat beispielsweise als ein Homopolymer oder als ein Copolymer ausgebildet sein. Ebenso können die polymeren Seitenketten Homopolymere und/oder Copolymere darstellen. Dabei ist es auch möglich, dass einzelne Seitenketten im Kammpolymer **KP** als Homopolymere ausgebildet sind und zugleich andere Seitenketten in Form von Copolymeren vorliegen.

Rückgratmonomere und Seitenkettenmonomere im Kammpolymer **KP** sind insbesondere wenigstens teilweise verschieden. Insbesondere besteht das Polymerrückgrat gänzlich aus anderen Monomeren als die Seitenketten des Kammpolymers **KP.** Das Kammpolymer **KP** liegt in diesem Fall in Form eines Copolymers vor.

Die Polymerparameter *N*, *n*, *P* und *z* lassen sich insbesondere nach einzelnen oder mehreren der folgenden Schritte berechnen:

i) Bestimmung der Gesamtanzahl *X* umgesetzter oder vorliegender Rückgratmonomere:

$$X = \sum_i n_{Rückgratmonomer\ i} \ ,$$

wobei $n_i$ jeweils für die Molanzahl des Rückgratmonomers *i* steht. Im Falle einer Herstellung der Kammpolymere durch Copolymerisation ist die Gesamtzahl aus der jeweiligen Masse an umgesetzten Rückgratmonomeren ($m_i$) und deren Molekulargewichten ($M_i$) berechenbar nach:

$$X = \sum_i \frac{m_i}{M_i} \ .$$

Falls die Kammpolymere durch polymeranaloge Reaktion hergestellt werden, lässt sich die Gesamtanzahl umgesetzter Rückgratmonomere aus der eingesetzten Masse an Rückgratpolymer ($m_{\text{Rückgratpolymer}}$) und dem Molekulargewicht der Rückgratmonomere ($M_{\text{Rückgratmonomer}}$) bestimmen:

$$X = \frac{m_{Rückgratpolymer}}{M_{Rückgratmonomer}} \ .$$

Bei einem Polymerrückgrat bestehend aus unterschiedlichen Rückgratmonomeren kann mit einer durchschnittlichen Molekülmasse gerechnet werden.

Insbesondere werden bei beiden Verfahren nur die tatsächlich zu Kammpolymeren umgesetzten Monomere bzw. Rückgratpolymere berücksichtigt. Die entsprechenden Anteile können durch Grössenausschluss-Chromatographie bestimmt werden. Im Allgemeinen ist es jedoch möglich, eine nahezu vollständige Umsetzung (> 97% oder besser) zu erzielen.

ii) Bestimmung der Gesamtanzahl an umgesetzten oder vorliegenden Seitenkettenpolymeren *Y*. Falls wie üblich vorgängig hergestellte Seitenkettenpolymere eingesetzt werden, ist die Anzahl direkt aus der eingesetzten Masse an Seitenkettenpolymeren ($m_{\text{seitenkettenpolymer}}$) und deren Molekulargewicht ($M_{\text{Setenkettenmonomer}}$) berechenbar:

$$Y = \frac{m_{Seitenkettenpolymer}}{M_{Seitenkettenmonomer}}$$

Falls zugleich unterschiedliche Seitenkettenpolymere eingesetzt werden, stellt *Y* entsprechend eine Summe dar. Auch in Bezug auf die Seitenkettenpolymere werden mit Vorteil nur die tatsächlich zu Kammpolymeren umgesetzten Seitekettenpolymere berücksichtigt.

iii) Berechnung von *N* = *X*/*Y*(= durchschnittliche Anzahl von Rückgratmonomeren pro Seitenkette).

iv) Berechnung von *z* (= durchschnittliche Anzahl an ionisierbaren Gruppen pro Seitenkettenfreiem Rückgratmonomer). Hierfür wird die Gesamtsanzahl an ionisierenden Gruppen an den Rückgratmonomeren durch die Summe

der Rückgratmonomere, welche keine Seitenketten tragen, dividiert.

v) Berechnung des Molekulargewichts $M_s$ eines Polymersegments bestehend aus einer Seitenkette und *N* Rückgratmonomeren. Hierfür werden die jeweiligen Molekülmassen anteilsmässig addiert.

vi) Bestimmung des zahlengemittelten Molekulargewichts $M_n$ des Kammpolymers, insbesondere durch Grössenausschluss-Chromatographie mit Pullulan als Standard, wobei

$$M_n = \frac{\sum n_i M_i}{\sum n_i},$$

dabei ist $n_i$ = Anzahl Moleküle mit Gewicht $M_i$;

vii) Berechnung von $n = M_n / M_s$ (= durchschnittliche Anzahl von Seitenketten pro Kammpolymermolekül)

viii) Bestimmung der durchschnittlichen Anzahl Seitenkettenmonomere *P*. Diese wird insbesondere aus dem zahlengemittelten Molekulargewicht der Seitenkettenpolymere errechnet, indem das mittlere Molekulargewicht der Seitenkettenpolymere durch das Molekulargewicht der Seitenkettenmonomereinheiten dividiert wird.

Die Berechnung der Polymerparameter wird weiter hinten anhand von Ausführungsbeispielen weiter veranschaulicht.

Unter einer "Bindemittelzusammensetzung" wird vorliegend insbesondere eine Zusammensetzung enthaltend wenigstens ein mineralisches Bindemittel verstanden.

Das "alkalische Aktivierungsmittel" ist insbesondere eine basisch oder alkalisch wirkende Substanz. Darunter wird insbesondere eine Substanz verstanden, welche bei Zugabe zu einer wässrigen Lösung deren pH-Wert anzuheben vermag. Unter einem alkalischen Aktivierungsmittel ist im Speziellen eine Substanz zu verstehen, welche geeignet ist zur Aktivierung des Abbindens oder Erhärtens von latent hydraulischen und/oder puzzolanischen Bindemitteln.

Die Bindemittelzusammensetzung ist eine aktivierte Bindemittelzusammensetzung oder alkalisch aktivierte Bindemittelzusammensetzung, welche nebst dem Bindemittel zusätzlich ein alkalisches Aktivierungsmittel enthält. Insbesondere enthält die Bindemittelzusammensetzung ein Aktivierungsmittel zur Aktivierung eines latent hydraulischen und/oder puzzolanischen Bindemittels. Die alkalisch aktivierte Bindemittelzusammensetzung verfügt dabei insbesondere über einen höheren pH-Wert als eine analoge Bindemittelzusammensetzung, welche nicht aktiviert ist oder kein alkalisches Aktivierungsmittel enthält. Das alkalische Aktivierungsmittel kann in freier oder gelöster Form vorliegen, z.B. als Salz, und/oder wenigstens teilweise mit dem Bindemittel reagiert haben.

Unter dem Ausdruck "latente hydraulische und/oder puzzolanische Bindemittel" werden im vorliegenden Zusammenhang insbesondere Bindemittel verstanden, welche erst durch Einwirkung von Zusätzen bzw.

Aktivierungsmittel hydraulisch abbinden oder erhärten. Insbesondere sind dies reaktive Zusatzstoffe, insbesondere reaktive Zusatzstoffe vom Typ II gemäss Norm EN 1045-2.

Bevorzugt enthält die Bindemittelzusammensetzung ein latent hydraulisches und/oder puzzolanisches Bindemittel oder besteht daraus. Mögliche latent hydraulische und/oder puzzolanische Bindemittel sind insbesondere Schlakken, Puzzolane, Flugaschen, Silicastaub, Vulkanaschen, Metakaoline, Reishülsen (rice husk), gebrannter Schiefer und/oder calcinierter Ton. Bevorzugte latent hydraulische und/oder puzzolanische Bindemittel umfassen Schlacken, Puzzolane, Flugaschen und/oder Silicastaub. besonders bevorzugt ist vorliegend Flugasche. Ebenfalls vorteilhaft ist Schlakke.

Die Bindemittelzusammensetzung ist insbesondere eine zementöse oder zementhaltige Bindemittelzusammensetzung. Ein Anteil des Zements an der Bindemittelzusammensetzung beträgt dabei im Speziellen, wenigstens 5 Gew.-%, insbesondere 5 - 95 Gew.-%, bevorzugt 60 - 80 Gew.-%. Als Zement ist z.B. ein Portlandzement geeignet. Es können aber beispielsweise auch Kalziumaluminatzemente, Portlandkalksteinzemente und/oder Belitreiche Sulfoaluminatzement eingesetzt werden.

In einer vorteilhaften Ausführungsform weist die Bindemittelzusammensetzung insbesondere 5 - 95 Gew.-%, insbesondere 15 - 50 Gew.-%, besonders bevorzugt 20 - 40 Gew.-% an latent hydraulischem und/oder puzzolanischem Bindemittel, sowie 5 - 95 Gew.-%, bevorzugt 60 - 80 Gew.-%, an hydraulischem Bindemittel auf. Das hydraulische Bindemittel ist dabei mit Vorteil ein Zement, insbesondere ein Portlandzement.

Die Bindemittelzusammensetzung kann zusätzlich oder anstelle der vorstehend genannten Komponenten beispielsweise auch andere hydraulische Bindemittel, z.B. hydraulischen Kalk, beinhalten. Ebenso kann die Bindemittelzusammensetzung auch nichthydraulische Bindemittel enthalten, beispielsweise Gips, Anhydrit und/oder Weisskalk.

Weiter kann die Bindemittelzusammensetzung inerte Stoffe, z.B. Pigmente, Kalkstein oder Kalksteinmehl enthalten. Dies insbesondere in Kombination mit latent hydraulischen und/oder puzzolanischen Bindemitteln. Dadurch kann ein Teil der latent hydraulischen und/oder puzzolanischen Bindemitteln durch inerte Stoffe, z.B. Kalkstein, ersetzt werden. Ein Anteil der inerten Stoffe beträgt insbesondere 0.1 - 30 Gew.-%, bevorzugt 0.1 - 20 Gew.-%, weiter bevorzugt 0.1 -

15 Gew.-%.

Das Aktivierungsmittel umfasst mit Vorteil ein Alkalimetallsalz und/oder Erdalkalimetallsalz. Insbesondere handelt es sich dabei um ein Alkalimetallhydroxid, Alkalimetallcarbonat und/oder ein Alkalimetallsulfat. Bevorzugt sind NaOH, KOH, $Na_2CO_3$ und/oder $Na_2SO_4$. Besonders bevorzugt ist ein Alkalimetallhydroxid und/oder ein Alkalimetallcarbonat. Insbesondere ist das Aktivierungsmittel NaOH und/oder $Na_2CO_3$, bevorzugt $Na_2CO_3$.

Derartige Aktivierungsmittel rufen eine besonders starke Aktivierung der latenthydraulischen und puzzolanischen Bindemittel hervor und sind zugleich mit den erfindungsgemässen Kammpolymeren **KP** kompatibel. Damit sind hohe Frühfestigkeiten erreichbar bei gleichzeitig guter Verarbeitbarkeit der Bindemittelzusammensetzungen. Prinzipiell sind aber auch andere Aktivierungsmittel einsetzbar.

Eine Konzentration des Aktivierungsmittels beträgt mit Vorteil 0.001 - 5 Gew.-%, bevorzugt 0.1 - 1.5 Gew.-%, noch weiter bevorzugt 0.5 - 1.5 Gew.-%, jeweils bezogen auf das Gewicht des latent hydraulischen und/oder puzzolanischen Bindemittels.

Das Polymerrückgrat des Kammpolymers **KP** beinhaltet insbesondere polymerisierte Acrylsäure-, Methacrylsäure- und/oder Maleinsäureeinheiten. Bevorzugt sind dabei Methacrylsäure- und/oder Maleinsäureeinheiten, besonders bevorzugt sind Maleinsäureeinheiten.

Die Acrylsäure-, Methacrylsäure- und/oder Maleinsäureeinheiten verfügen dabei wenigstens teilweise über freie Säuregruppen oder deren Salze. Diese fungieren insbesondere als ionische Gruppen. Weiter bevorzugt liegen die Acrylsäure-, Methacrylsäure- und/oder Maleinsäureeinheiten teilweise in Form von Ester- und/oder Amidderivaten vor. Besonders bevorzugt trägt wenigstens ein Teil der Acrylsäure-, Methacrylsäure- und/oder Maleinsäureeinheiten wenigstens einen Teil der Seitenketten des Kammpolymers.

Gemäss einer bevorzugten Ausführungsform besteht das Polymerrückgrat zu wenigstens 40 Mol-%, insbesondere wenigstens 50 Mol.-%, aus Acrylsäure-, Methacrylsäure- und/oder Maleinsäureeinheiten.

Entsprechend einer weiteren bevorzugten Ausführungsform beinhaltet das Polymerrückgrat polymerisierte Vinyl-, Allyl- und/oder Isoprenyletherverbindungen. Besonders bevorzugt sind Vinyl-, Allyl- und/oder Isoprenylpolyalkylenoxide. Die Polyalkylenoxideinheiten bilden dabei insbesondere Seitenketten des Kammpolymers.

Die polymeren Seitenketten des Kammpolymers **KP** sind insbesondere hydrophil. Bevorzugt sind die polymeren Seitenketten aus Seitenkettenmonomeren aufgebaut, welche nebst C- und H-Atomen wenigstens ein Heteroatom, im Besonderen Sauerstoff, enthalten.

In einer bevorzugten Ausführungsform bestehen die Seitenketten ausschliesslich aus C-, O-, und H-Atomen.

Besonders vorteilhaft umfassen die polymeren Seitenketten Polyether, insbesondere $C_2$- bis $C_4$-Polyalkylenoxide. Besonders bevorzugt sind polymere Seitenketten, welche, bezogen auf die Gesamtzahl an Monomeren in der Seitenkette, wenigstens 50 Mol-% Polyethylenoxide aufweisen.

Mit Vorteil sind die polymeren Seitenketten, insbesondere Polyalkylenoxide, wenigstens teilweise über eine Ester-, Ether- und/oder Amidgruppe an das Polymerrückgrat gebunden.

Wie sich gezeigt hat, liegt mit Vorteil ein Verhältnis

a) der durchschnittlichen Gesamtanzahl von freien Säuregruppen, insbesondere COOH-Gruppen, deren Anionen und Salze, zu

b) der durchschnittlichen Anzahl an Seitenketten pro Kammpolymermolekül,

im Bereich von 2 - 5, insbesondere 3 - 4. Dieses Verhältnis wird vorliegende auch als C/E-Verhältnis bezeichnet. Im Hinblick auf eine bestmögliche Kompatibilität mit alkalisch aktivierten Bindemittelzusammensetzungen und eine gute Verflüssigungswirkung haben sich Kammpolymere **KP** mit derartigen C/E-Verhältnissen als besonders vorteilhaft erwiesen.

Unter dem Begriff "freie Säuregruppen" werden dabei insbesondere Säuregruppen verstanden, welche nicht verestert, amidiert oder anderweitig derivatisiert sind. Die freien Säuregruppen können aber als Anionen in deprotonierter Form oder als Salz mit einem Gegenion bzw. Kation vorliegen. Bei den freien Säuregruppen handelt es sich insbesondere um Carbonsäure-, Sulfonsäure-, Phosphorsäure- und/oder Phosphonsäuregruppen. Bevorzugt sind Carbonsäuregruppen. Die freien Säuregruppen fungieren dabei als ionische oder ionisierbare Gruppen.

Ein durchschnittliches zahlengemitteltes Gesamtgewicht $M_n$ des Kammpolymers **KP** kann beispielsweise im Bereich von 1'000 - 200'000 g/mol liegen. Bevorzugt sind Kammpolymere **KP** mit einem durchschnittlichen Gesamtgewicht $M_n$ von 1'000 - 20'000 g/mol, insbesondere 5'000 - 15'000 g/mol.

Ein durchschnittliches zahlengemitteltes Gesamtgewicht $M_n$ der Seitenketten kann z.B. im Bereich von 100 - 10'000 g/mol liegen. Bevorzugt sind 500 - 5'000 g/mol, insbesondere 800 - 3'000 g/mol, weiter bevorzugt 1'000 - 2'000 g/mol.

Als besonders bevorzugt haben sich im vorliegenden Zusammenhang Kammpolymere mit n = 2 - 50, N = 2 - 10 und/oder P = 10 - 100 erwiesen. Weiter bevorzugt sind n = 3 - 10, N = 3 - 6 und/oder P = 20 - 50. Solche Kammpolymere

weisen im Allgemeinen eine überraschend gute Verträglichkeit mit alkalisch aktivierten Bindemittelzusammensetzungen auf und zeigen zugleich eine gute Dispergierwirkung.

Gemäss einer besonders bevorzugten Ausführungsform wird ein Kammpolymer **KP** enthaltend wenigstens eine polymerisierte Maleinsäureeinheit und wenigstens ein polymerisiertes Allyletherpolyalkylenoxid verwendet. Ebenfalls vorteilhaft können Kammpolymere **KP** enthaltend polymerisierte Methacrylsäureeinheiten sein, wobei ein Teil der Methacrylsäureeinheiten über eine Esterbindung gebundene Polyalkylenoxid-Seitenketten aufweist.

Die erfindungsgemäss verwendeten Kammpolymere KP weisen insbesondere folgende Teilstruktureinheiten auf:

a) $n_1$ Teilstruktureinheiten S1 der Formel (I):

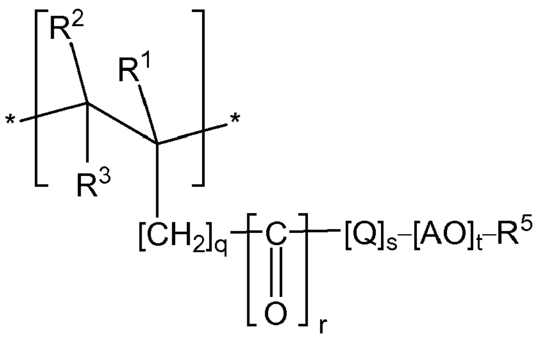

(I)

b) $n_2$ Teilstruktureinheiten **S2** der Formel (II):

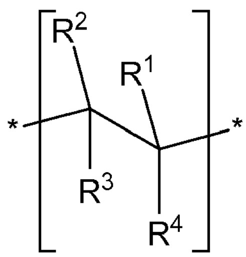

(II)

c) $n_3$ Teilstruktureinheiten **S3** der Formel (III):

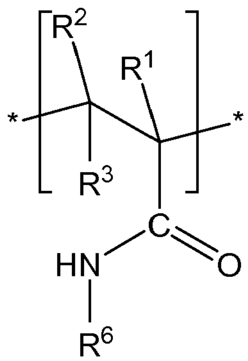

(III)

d) $n_4$ Teilstruktureinheiten **S4** der Formel (IV):

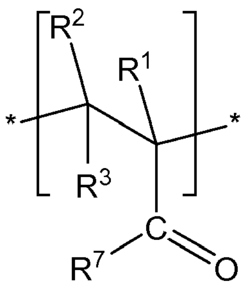

(IV)

e) optional $n_5$ Einheiten wenigstens einer weiteren Struktureinheit **S5**; wobei:

jedes $R^1$, $R^2$ und $R^3$ unabhängig von den anderen für H, COOM, $CH_2COOM$ oder eine Alkylgruppe mit 1 bis 5 Kohlenstoffatomen stehen,

jedes $R^4$ unabhängig von den anderen für -COOM, $-CH_2COOM$, $-SO_2-OM$, -O-PO(OM)$_2$ und/oder -PO(OM)$_2$ steht;

oder wobei $R^3$ mit $R^4$ einen Ring bildet zu -CO-O-CO-;

wobei M für H, ein Alkalimetall, ein Erdalkalimetall, Ammonium, ein Ammoniumkation, eine organische Ammoniumverbindung oder Mischungen davon steht;

und wobei weiter:

q = 0, 1 oder 2 ist;

jedes Q unabhängig von den anderen für -O-, -NH-, und/oder -HC=N-steht, und s = 0 oder 1 ist;

jedes A unabhängig von den anderen ein $C_2$- bis $C_4$-Alkylen darstellt, mit t = 2 - 300;

jedes $R^5$ unabhängig von den anderen für H, eine $C_1$- bis $C_{20}$-Alkylgruppe, -Cyclohexyl-gruppe oder -Alkylarylgruppe steht;

jedes $R^6$ unabhängig von den anderen für eine $C_1$- bis $C_{20}$-Alkylgruppe, -Cycloalkylgruppe, -Alkylarylgruppe oder für $-[AO]_t-R^5$ steht;

jedes $R^7$ unabhängig von den anderen für $-NH_2$, $-NR^8R^9$, $-OR^{10}NR^{11}R^{12}$ stehen,
wobei $R^8$ und $R^9$ unabhängig voneinander für
eine $C_1$- bis $C_{20}$-Alkylgruppe, -Cycloalkylgruppe -Alkylaryl-gruppe oder-Arylgruppe stehen,
oder für eine Hydroxyalkylgruppe oder für eine Acetoxyethyl- ($CH_3-CO-O-CH_2-CH_2-$) oder eine Hydroxyisopropyl- ($HO-CH(CH_3)-CH_2-$) oder eine Acetoxyisopropylgruppe ($CH_3-CO-O-CH(CH_3)-CH_2-$) stehen;
oder $R^8$ und $R^9$ bilden zusammen einen Ring, von dem der Stickstoff ein Teil ist, um einen Morpholin- oder Imidazolinring aufzubauen;
$R^{10}$ eine $C_2$-$C_4$-Alkylengruppe ist,

$R^{11}$ und $R^{12}$ je unabhängig voneinander eine $C_1$- bis $C_{20}$-Alkylgruppe, - Cycloalkylgruppe, -Alkylarygruppe, -Arylgruppe oder eine Hydroxyalkylgruppe darstellen,

und wobei $n_1$, $n_2$, $n_3$, $n_4$ und $n_5$ die durchschnittliche Anzahl der jeweiligen Teilstruktureinheiten **S1, S2, S3, S4** und **S5** in einem Molekül des Kammpolymers **KP** darstellen, mit
$n_1/n_2/n_3/n_4/n_5$ = (0.1 - 0.9) / (0.1 - 0.9) / (0 - 0.8) / (0 - 0.8) / (0 - 0.8), bevorzugt $n_1/n_2/n_3/n_4/n_5$ = (0.3 - 0.9) / (0.1 - 0.7) / (0 - 0.6) / (0 - 0.4) / 0.

Die Teilsstruktureinheit **S1** trägt dabei eine polymere Seitenkette $[AO]_t$, aufgebaut aus t Seitenkettenmonomeren AO mit Sauerstoff als Heteroatom. Falls $R^6$ für $-[AO]_t-R^5$ steht, gilt dies entsprechend auch für die Teilstruktureinheit **S3.** A, t und $R^5$ können in den einzelnen Teilstruktureinheiten **S1** und/oder **S3** prinzipiell individuell gewählt werden. Es

ist beispielsweise also möglich, dass in einem Kammpolymer mehrere Teilstruktureinheiten **S1** mit unterschiedlichen $-[AO]_t-R^5$ Einheiten vorliegen. Dasselbe gilt auch für die Teilstruktureinheiten **S3.**

Die übrigen Teilstruktureinheiten **S2** und **S4** tragen insbesondere keine polymeren Seitenketten, welche aus Seitenkettenmonomeren mit Heteroatomen aufgebaut sind.

Bevorzugte Ausführungsformen bezüglich der Teilstruktureinheit **S1** sind dabei folgende:

A1) Bei wenigstens einer Teilstruktureinheit **S1,** insbesondere bei allen Teilstruktureinheiten **S1**, sind q = 0, r = 0 und s = 1 und Q steht für -O-und/oder

B1) bei wenigstens einer Teilstruktureinheit **S1,** insbesondere bei allen Teilstruktureinheiten **S1,** sind q = 1, r = 0 und s = 1 und Q steht für -O-und/oder

C1) bei wenigstens einer Teilstruktureinheit **S1**, insbesondere bei allen Teilstruktureinheiten **S1,** ist $R^1$ eine Methylgruppe, q = 2, r = 0 und s = 1 und Q steht für -O- und/oder

D1) bei wenigstens einer Teilstruktureinheit **S1**, insbesondere bei allen Teilstruktureinheiten **S1,** ist $R^1$ eine Methylgruppe, q = 0, r = 1 und s = 1 ist und Q für -O-.

Unabhängig davon steht $R^5$ bei wenigstens einer Teilstruktureinheit **S1,** insbesondere bei allen Teilstruktureinheiten **S1,** bevorzugt für eine Methylgruppe. A umfasst bei wenigstens einer Teilstruktureinheit **S1,** insbesondere bei allen Teilstruktureinheiten **S1,** mit Vorteil ein $C_2$-Alkylen. Falls $R^6$ für $-[AO]_t-R^5$ steht, gilt dies entsprechend auch für die Teilstruktureinheit **S3.**

In einer bevorzugten Ausführungsform steht $[AO]_t$ bei wenigstens einer Teilstruktureinheit **S1,** insbesondere bei allen Teilstruktureinheiten **S1,** für ein Homopoylmer aus Ethylenoxid. Falls $R^6$ für $-[AO]_t-R^5$ steht, gilt dies entsprechend auch für die Teilstruktureinheiten **S3.**

Gemäss einer anderen vorteilhaften Ausführungsform steht $[AO]_t$ bei wenigstens einer Teilstruktureinheit **S1,** insbesondere bei allen Teilstruktureinheiten **S1,** für ein Copolymer aus Ethylenoxid und Propylenoxid, wobei Ethylenoxid mit Vorteil einen Anteil von wenigstens 50 Mol-% aufweist. Die Ethylenoxid- und Propylenoxideinheiten können dabei unabhängig voneinander in jeder Seitenkette zufällig oder blockweise angeordnet sein. Falls $R^6$ für $-[AO]_t-R^5$ steht, gilt dies entsprechend auch für die Teilstruktureinheiten **S3.**

Unabhängig davon hat es sich als vorteilhaft erwiesen, wenn in wenigstens einer Teilstruktureinheit **S1,** insbesondere bei allen Teilstruktureinheiten **S1,** t einen Wert von 10 - 120, insbesondere 15 - 70, weiter bevorzugt 20 - 30, annimmt. Falls $R^6$ für $-[AO]_t-R^5$ steht, gilt dies entsprechend auch für die Teilstruktureinheiten **S3**

Besonders bevorzugte Ausführungsformen bezüglich der Teilstruktureinheit **S2** sind folgende:

A2) Bei wenigstens einer Teilstruktureinheit **S2,** insbesondere bei allen Teilstruktureinheiten **S2,** stehen $R^1$ und $R^3$ für Wasserstoff sowie $R^2$ für COOM und/oder

B2) bei wenigstens einer Teilstruktureinheit **S2**, insbesondere bei allen Teilstruktureinheiten **S2,** steht $R^1$ für eine Methylgruppe sowie $R^2$ und $R^3$ für Wasserstoff und/oder

C2) bei wenigstens einer Teilstruktureinheit **S2,** insbesondere bei allen Teilstruktureinheiten **S2,** stehen $R^1$, $R^2$ und $R^3$ für Wasserstoff.

Unabhängig davon steht $R^4$ bei wenigstens einer Teilstruktureinheit **S2,** insbesondere bei allen Teilstruktureinheiten **S2,** mit Vorteil für COOM.

Besonders vorteilhafte Ausführungsformen stellen Kombinationen von Teilstruktureinheiten **S1** gemäss Variante **B1)** und Teilstruktureinheiten **S2** gemäss Variante A2) dar.

Ebenfalls vorteilhafte Ausführungsformen stellen Kombinationen von Teilstruktureinheiten **S1** gemäss Variante D1) und Teilstruktureinheiten **S2** gemäss Variante B2) mit $R^4$ = COOM dar.

Die weitere Struktureinheit **S5** kann beispielsweise eine polymerisierte ethylenisch ungesättigte Kohlenwasserstoffverbindung sein.

Weiter hat es sch als vorteilhaft erwiesen, wenn $n_1$ = 2 - 30, $n_2$ = 0.1 - 50, $n_3$ = 0 - 25, $n_4$ = 0 - 25 und $n_5$ = 0 - 15. Noch vorteilhafter sind $n_1$ = 2 - 30, $n_2$ = 0.1 - 50, $n_3$ = 0.001 - 25, $n_4$ = 0, und $n_5$ = 0.

Die Teilstruktureinheiten **S1, S2, S3, S4** und **S5** bilden mit Vorteil wenigstens 90 Mol.-%, weiter bevorzugt wenigstens 95 Mol.-% der Gesamtmolmenge des Kammpolymers **KP.**

Weiter ist es möglich, eine Mischung aus zwei chemisch und/oder strukturell unterschiedlichen Kammpolymeren **KP** zu verwenden.

Ein weiterer Aspekt der Erfindung betrifft eine Bindemittelzusammensetzung enthaltend ein mineralisches Bindemittel und ein alkalisches Aktivierungsmittel sowie ein wie vorstehend definiertes Kammpolymer **KP.** Zudem liegt in der Bindmittelzusammensetzung insbesondere ein latent hydraulisches und/oder puzzolanisches Bindemittel vor. Das Aktivierungsmittel ist mit Vorteil ein wie vorstehend beschriebenes Aktivierungsmittel, im Besonderen für latent hydraulische und/oder puzzolanische Bindemittel. Derartige Bindemittelzusammensetzungen lassen sich beispielsweise zusammen mit Aggregaten wie Sand, Kies und/oder Gesteinskörnungen für die Herstellung von Mörteln und/oder Beton einsetzen.

Wie sich herausgestellt hat, lassen sich wässrige Aufschlämmungen solcher Bindemittelzusammensetzungen auch bei hohem Anteil an latenten und/oder puzzolanischen Bindemitteln gut verarbeiten. Zudem werden ausreichende Frühfestigkeiten und hohe Festigkeiten nach dem Aushärten der Bindemittelzusammensetzungen erreicht.

Entsprechend sind durch Aushärten von solchen Bindemittelzusammensetzungen nach Zugabe von Wasser Formkörper erhältlich. Diese können prinzipiell beliebig geformt werden und z.B. Bestandteil eines Bauwerks, z.B. eines Gebäudes oder einer Brücke, sein.

Ein weiterer Aspekt der vorliegenden Erfindung betrifft ein Verfahren zur Herstellung einer Bindemittelzusammensetzung. Dabei wird ein mineralisches Bindemittel, welches insbesondere ein latent hydraulisches und/oder puzzolanisches Bindemittel enthält, mit einem Kammpolymer **KP**, wie vorstehend beschrieben, und einem alkalischen oder basischen Aktivierungsmittel vermischt.

Gemäss einem bevorzugten Verfahren wird dabei das Anmachwasser für die Bindemittelzusammensetzung mit dem Aktivierungsmittel vorgemischt und anschliessend das Kammpolymer **KP** beigemischt. In einem nachfolgenden Schritt wird dann das Anmachwasser enthaltend das Kammpolymer und gegebenenfalls das Aktivierungsmittel mit dem Bindemittel vermischt. Dies hat sich im Hinblick auf eine möglichst gute Wirksamkeit des Kammpolymers **KP** in der Bindemittelzusammensetzung als vorteilhaft erwiesen.

Es aber prinzipiell auch möglich, zuerst das Aktivierungsmittel mit dem mineralischen Bindemittel zu vermischen, z.B. mit einem Teil des Anmachwassers, und nachträglich das Kammpolymer beizumischen, beispielsweise mit einem weiteren Teil des Anmachwassers.

Weiter kann es vorteilhaft sein, wenigstens einen Teil des Kammpolymer **KP,** insbesondere sämtliches Kammpolymer **KP,** vor und/oder während einem Mahlprozess des mineralischen Bindemittels, z.B. einem hydraulischen, latent hydraulischen und/oder puzzolanischen Bindemittels, beizumischen.

Unabhängig davon kann es auch bevorzugt sein, wenigstens einen Teil des Aktivierungsmittels, insbesondere sämtliches Aktivierungsmittel, vor und/oder während einem Mahlprozess des mineralischen Bindemittels beizumischen. Gegebenenfalls können sowohl das Kammpolymer als auch das Aktivierungsmittel wenigstens teilweise vor und/oder während dem Mahlprozess zugegeben werden.

Diese Arten der Zugabe können insbesondere die Handhabung beim Anmachen von Bindemittelzusammensetzungen vereinfachen und gegebenenfalls den Mahlprozess positiv beeinflussen.

## Kurze Beschreibung der Figuren

Die zur Erläuterung der Ausführungsbeispiele verwendeten Figuren zeigen:

Fig. 1 Eine Tabelle, welche eine Übersicht über die Eigenschaften und Parameter von verwendeten Kammpolymeren gibt;

Fig. 2 - 5 Die zeitlichen Entwicklungen der Fliessspannungen von Bindemittelzusammensetzung enthaltend einen Zement/Flugasche-Binder (Wasser/Binder-Verhältnis = 0.33) und jeweils ein Kammpolymer als Dispergiermittel bei verschiedenen Konzentrationen an Aktivierungsmittel (NaOH);

Fig. 6 Einen Vergleich des zeitlichen Verlaufs der relativen Wärmeentwicklung von verschiedenen Bindemittelzusammensetzungen enthaltend einen Zement/Flugasche-Binder, ein Dispergiermittel (Kammpolymer) und unterschiedliche Aktivierungsmittel (NaOH, KOH, $Na_2CO_3$);

Fig. 7 Einen Vergleich des zeitlichen Verlaufs der relativen Wärmeentwicklung verschiedenen Bindemittelzusammensetzungen enthaltend einen Zement/Flugasche-Binder, ein Dispergiermittel (Kammpolymer) und verschiedene Konzentrationen an Aktivierungsmittel (NaOH).

**Ausführungsbeispiele**

1. Kammpolymere

1.1 Herstellungsbeispiel Kammpolymer **P1** (Copolymerisation)

In einem Reaktionsgefäss mit Rührer, Thermometer und Rückflusskühler werden 250 g Wasser, 81 g (0.7 mol) Maleinsäure, 560 g (0.51 mol) eines Allyl-Polyethylenglycolethers (Polyglycol A 1100, Clariant; einseitig Methoxyterminiertes Polyethylenglycol mit $M_n$ = 1'100), 20.6 g (0.24 mol) Vinylacetat, 2 g Natriumhypophosphit und 1.5 g einer 10%-igen wässrigen Lösung von Fe(II)-$SO_4$ vorgelegt.

Danach wird die Temperatur auf 25°C gebracht. Nun wird über einen Zeitraum von 150 Minuten eine Lösung von 17 g Wasserstoffperoxyd (35%ig in 43 g Wasser; Zulauf 1) sowie eine Lösung von 6.5 g Rongalit in 60 g Wasser (Zulauf 2) zugetropft. Dabei wird die Temperatur zwischen 30 - 35°C gehalten. Nach vollständiger Zugabe wird noch 30 min nachgerührt. Es wird eine farblose leicht getrübte viskose Lösung erhalten mit einem Feststoffgehalt von 63.6%.

Das so hergestellte Kammpolymer mit copolymerisiertem Maleinsäure/Allylether/Vinylacetat-Rückgrat und einseitig Methoxy-terminierten Polyethylenglycolether-Seitenketten wird im Folgenden als Kammpolymer **P1** bezeichnet. Die MPEG-Seitenketten sind dabei über Etherbindungen an das Polymerrückgrat gebunden.

1.2 Herstellungsbeispiel Kammpolymer **P2** (Polymeranaloge Umsetzung)

In einem Reaktionsgefäss mit Rührer, Thermometer und Vakuumanschluss und Destillationseinrichtung werden 240 g (0.0172 mol) Polymethacrylsäure (35.8% in Wasser) mit einem mittleren Molekulargewicht von 5'000 g/mol vorgelegt (ein Polymethacrylsäuremolekül verfügt entsprechend über ca. 58 Methacrylsäuremonomere). Unter Rühren werden 2.5g 50%ige Schwefelsäure zugegeben. Anschliessend werden 222 g (0.222 mol) eines einseitig mit einer Methoxyendgruppe verschlossenen Polyethylenglycols (im Folgenden als MPEG bezeichnet) mit einem mittleren Molekulargewicht $M_w$ = 1'000 g/mol zugegeben. Die Reaktionsmischung wird nun langsam unter Rühren auf 165°C erwärmt. Dabei wird Wasser kontinuierlich abdestilliert. Das Reaktionsgemisch wird für 30 Minuten bei 165°C gehalten und anschliessend wird ein Vakuum von 80-100 mbar angelegt und die Temperatur auf 175°C gesteigert. Das Reaktionsgemisch wird so lange Verestert bis mittels UPLC (Ultra Performance Liquid Chromatography) der Polymergehalt > 97% beträgt, was in der Regel 2-3 Std. benötigt.

Das so hergestellte Kammpolymer mit Polymethacrylatrückgrat und MPEG-Seitenketten wird im Folgenden als Kammpolymer **P2** bezeichnet. Die MPEG-Seitenketten sind dabei über Esterbindungen an das Polymerrückgrat gebunden.

1.3 Herstellung Kammpolymer **P3**

Kammpolymer **P3** wurde im Wesentlichen wie Kammpolymer **P1** hergestellt. Es wurden jedoch 1.0 mol des Allyl-Polyethylenglycolethers (Polyglycol A 1100), 2.0 mol der Maleinsäure und kein Vinylacetat eingesetzt. Kammpolymer **P3** verfügt entsprechend ein copolymerisiertes Maleinsäure/Allylether-Rückgrat und einseitig Methoxy-terminierten Polyethylenglycolether-Seitenketten, welche über Etherbindungen an das Rückgrat gebunden sind.

1.4 Herstellung Kammpolymer **P4**

Kammpolymer **P4** wurde ebenfalls im Wesentlichen wie Kammpolymer **P1** hergestellt. Es wurden jedoch 0.3 mol des Allyl-Polyethylenglycolethers (Polyglycol A 1100), 0.45 mol der Maleinsäure und 0.15 mol Vinylacetat eingesetzt. Kammpolymer **P4** verfügt entsprechend über ein copolymerisiertes Maleinsäure/Allylether/Vinylacetat-Rückgrat und einseitig Methoxy-terminierten Polyethylenglycolether-Seitenketten, welche über Etherbindungen an das Rückgrat gebunden sind.

1.5 Herstellung Kammpolymer **P5**

Kammpolymer **P4** wurde wie Kammpolymer **P1** durch Copolymerisation hergestellt. Dabei wurden 3.3 mol Methacrylsäure und 1.0 mol eines Esters aus Methacrylsäure und einem Polyethylenglycolethers ($M_n$ = 1000 g/mol, Methoxy-terminiert) copolymerisiert. Kammpolymer **P5** verfügt entsprechend über ein copolymerisiertes Methacrylsäure/ Methacrylester-Rückgrat und einseitig Methoxy-terminierten Polyethylenglycolether-Seitenketten, welche über Esterbindungen an das Rückgrat gebunden sind.

1.6 Herstellung Kammpolymer **P6**

Kammpolymer **P6** wurde im Wesentlichen wie Kammpolymer **P2** (siehe Kapitel 1.2) hergestellt. Dabei wurde die selbe Polymethacrylsäure in der gleichen Menge wie bei Kammpolmyer **P2** eingesetzt. Anstelle von 222 g des einseitig mit einer Methoxyendgruppe verschlossenen Polyethylenglycols ($M_n$ = 1'000 g/mol) wurden aber nur 120 g umgesetzt. Kammpolymer **P6** verfügt somit über ein Polymethacrylatrückgrat und MPEG-Seitenketten, welche über Esterbindungen an das Rückgrat gebunden sind.

1.7 Herstellung Kammpolymer **P7**

Kammpolymer **P7** wurde ebenfalls im Wesentlichen wie Kammpolymer **P2** hergestellt. Auch hier wurde die selbe Polymethacrylsäure in der gleichen Menge wie bei Kammpolmyer **P2** eingesetzt. Anstelle von 222 g des einseitig mit einer Methoxyendgruppe verschlossenen Polyethylenglycols ($M_n$ = 1'000 g/mol) wurden aber 370 g umgesetzt. Auch Kammpolymer **P7** verfügt somit über ein Polymethacrylatrückgrat und MPEG-Seitenketten, welche über Esterbindungen an das Rückgrat gebunden sind.

1.8 Herstellung Kammpolymer **P8**

Kammpolymer **P8** analog zu Kammpolymer **P2** hergestellt. Es wurden aber eine Poly(meth)acrylsäure bestehend aus 0.5 mol Acrylsäuremonomeren und 0.5 mol Methacrylsäuremonomeren mit 0.18 mol eines Polyethylenglycolethers mit einem mittleren Molekulargewicht von 3'000 g/mol in einer polymeranalogen Reaktion umgesetzt (wie bei **P2** beschrieben). Kammpolymer **P8** verfügt somit über ein gemischtes Polyacrylat-Polymethacrylat-Rückgrat und MPEG-Seitenketten, welche über Esterbindungen an das Rückgrat gebunden sind.

1.9 Herstellung Kammpolymer **P9**

Kammpolymer **P9** wurde ebenfalls wie Kammpolymer **P2** durch eine polymeranaloge Umsetzung hergestellt. Dabei wurde Polymethacrylsäure (beinhaltend insgesamt 1.0 mol Methacrylsäuremonomere) mit 0.360 mol eines einseitig Methoxy-terminierten MPEG (mittleres Molekulargewicht $M_w$ = 1'000 g/mol) und 0.002 mol eines einseitig Amin-funktionalisierten Polyalkylenoxid mit endseitiger Methoxy-Terminierung (50 mol-% Ethylenoxid- und 50 mol-% Propylenoxid-Einheiten; mittleres Molekulargewicht $M_n$ = 2'000 g/mol). Weitere Angaben zur Herstellung finden sich z.B. in EP 1 138 697 A1 oder WO 03/080714. Kammpolymer **P9** verfügt somit über ein Polymethacrylat-Rückgrat und unterschiedlichen MPEG-Seitenketten, welche über Ester- und Amid-Bindungen an das Rückgrat gebunden sind.

1.10 Bestimmung Molekülmassen

Die Massen der hergestellten Kammpolymere **P1 - P9** wurden durch Grössenausschluss-Chromatographie (Englisch: Size Exclusion Chromatography; auch als Gel-Permeations-Chromatographie (GPC) bezeichnet) bestimmt. Diese Technik ist dem Fachmann an sich bekannt und erlaubt eine Bestimmung der Molekülmassen.

Vorliegend wurde für die Grössenausschluss-Chromatographie folgendes System eingesetzt:

- Autosampler: Waters 717 Asutoasampler
- Pumpe: Varian Pro Star
- Detektor: Varian RI-4 und Waters 2998 PDA
- Säulen: Suprema 30 Å + 1000 Å + 1000 Å

Als Eluent wurde 0.1 N $NaNO_3$-Lösung (17 g $NaNO_3$ auf 1000 ml $H_2O$), welche mit 2 N NaOH auf pH 12 eingestellt wurde, verwendet.

Gemessen wurde jeweils isokratisch (Zusammensetzung des Eluenten und Fliessmittelstärke bleiben konstant) bei einem Fluss von 0.8 ml/min und einer Injektionsmenge von 50 μl.

Zur Kallibration wurde als Standard Pullulan (für Kammpolymere) und Polyacrylsäure (für Rückgratpolymere) bei einer Konzentration von 0.5 - 2 mg/ml eingesetzt.

Zur Probenvorbereitung wurde die zu untersuchende Probe wird mit einer Konzentration von ca. 10 mg/ml im Eluent gelöst.

Die so ermittelten Molekülmassen der Kammpolymere **P1 - P9** sind in Tabelle 1 aufgeführt.

2. Bestimmung der Polymerparameter

2.1 Kammpolymer **P1**

Die Parameter *C/E*, *N, n, P* und *z* des Kammpolymers **P1** lassen sich aus den Angaben in Kapitel 1.1 und dem zugehörigen Molekulargewicht in Tabelle A wie folgt bestimmen:
Das Verhältnis *C/E* (Säuregruppen zu Seitenketten) berechnet sich wie folgt:

$$C/E = \frac{2n(Maleinsäure)}{n(Allylether)} = \frac{2 \cdot 0.7\,mol}{0.51\,mol} = 2.7$$

Der Faktor 2 berücksichtigt dabei die 2 Säuregruppen pro Maleinsäuremonomer.
Die durchschnittliche Anzahl von Rückgratmonomeren pro Seitenkette (*N*) ist wie folgt berechenbar:

$$N = \frac{n(Maleinsäure) + n(Vinylacetat) + n(Allylether)}{n(Allylether)} = \frac{0.7\,mol + 0.24\,mol + 0.51\,mol}{0.51\,mol} = 2.84$$

Als durchschnittliche Anzahl an ionisierbaren Gruppen pro Rückgratmonomer (z), bezogen auf diejenigen Rückgratmonomere, welche keine Seitenketten tragen, darstellt ergibt sich:

$$z = \frac{2n(Maleinsäure) + 0 \cdot n(Vinylacetat)}{n(Maleinsäure) + n(Vinylacetat)} = \frac{2 \cdot 0.7\,mol + 0}{0.7\,mol + 0.24\,mol} = \frac{1.4\,mol}{0.94\,mol} = 1.5$$

Der Faktor 2 berücksichtigt wiederum die 2 Säuregruppen pro Maleinsäuremolekül, während der Faktor 0 der Tatsache Rechnung trägt, dass Vinylacetat über keine ionisierbaren Gruppen verfügt.
Die durchschnittliche Anzahl von Seitenkettenmonomeren pro Seitenkette (*P*) ist

$$P = \frac{M(Allylether)}{M(Ethylenoxid)} = \frac{1100\,g/mol}{44\,g/mol} = 25.0$$

Dies weil der Allylether im Wesentlichen aus Ethylenoxidmonomeren besteht.
Ein Polymersegment, bestehend aus einer Seitenkette und den zugehörigen Rückgratmonomeren, weist dann folgende Masse [*M(Segment)]* auf:

$$M(Segment) = \frac{1}{n(Allylether)} \cdot \begin{bmatrix} n(Allylether) \cdot M(Allylether) + \\ n(Maleinsäure) \cdot M(Maleinsäure) + \\ n(Vinylacetat) \cdot M(Vinylacetat) \end{bmatrix}$$

$$= \frac{0.51\,mol \cdot 1100\,g/mol + 0.7\,mol \cdot 116.1\,g/mol + 0.24\,mol \cdot 86.1\,g/mol}{0.51\,mol} = 1300\,g/mol$$

Daraus lässt sich über die mittlere Molekülmasse eines Kammpolymers ($M_n$; siehe Tabelle 1) die durchschnittliche Anzahl von Seitenketten pro Kammpolymermolekül (*n*) oder die durchschnittliche Anzahl Segmente pro Kammpolymermolekül berechnen:

$$n = \frac{M_n(Kammpolymer\ P1)}{M(Segment)} = \frac{6600\ g/mol}{1300\ g/mol} = 5.07$$

Aus den Parametern *N*, *n, P* und *z* lässt sich schliesslich die Strukturkonstante K bestimmen:

$$K_{P1} = \frac{[(N-1)z]^2}{nP^{9/5}N^{3/5}} \times 10^5 = \frac{[(2.84-1)\cdot 1.5]^2}{(5.07\cdot 25.0)^{9/5}\cdot 2.84^{3/5}} \times 10^5 = 241$$

<u>2.2 Kammpolymer **P2**</u>

Die entsprechenden Parameter C/E, *N, n, P* und z des Kammpolymers **P2** lassen sich aus den Angaben in Kapitel 1.2 und dem zugehörigen Molekulargewicht in Tabelle 1 wie folgt bestimmen:

Die eingesetzte Polymethacrylsäure weist ein Molekulargewicht *M(Polymethacrylsäure)* = 5'000 g/mol auf. Das Molekulargewicht eines Methacrylsäuremonomers beträgt dabei 86.1 g/mol. Entsprechend besteht ein Molekül der Polymethacrylsäure durchschnittlich aus 58.1 Methacrylsäuremonomeren.

Da 0.0172 mol reine Polymethacrylsäure eingesetzt wurden, ist die Gesamtmenge an Methacrylsäuremonomeren

$$n(Methacrylsäuremonomere) = n(Polymethacrylsäure)\cdot 58.1 = 0.0172\ mol\cdot 58.1 = 1.0\ mol$$

Das Verhältnis C/E (Säuregruppen zu Seitenketten) berechnet sich wie folgt:

$$C/E = \frac{n(Methacrylsäuremonomere) - n(MPEG)}{n(MPEG)} = \frac{1.0\ mol - 0.222\ mol}{0.222\ mol} = 3.50$$

Diejenigen Methacrylsäuremonomere, welche mit den MPEG-Seitenketten verestert werden, reduzieren entsprechend die Anzahl freier Säuregruppen.

Die durchschnittliche Anzahl von Rückgratmonomeren pro Seitenkette (N) ist nun wie folgt berechenbar:

$$N = \frac{n(Methacrylsäuremonomere)}{n(MPEG)} = \frac{1.0\ mol}{0.222\ mol} = 4.50$$

Da die MPEG-Seitenketten bei der polymeranalogen Reaktion an das bereits bestehende Polymerrückgrat addiert werden, tragen diese nicht zu den Rückgratmonomeren bei und sind entsprechend im Zähler nicht enthalten (ungleich Kammpolymer **P1**, welches durch Copolymerisation hergestellt wird). Als durchschnittliche Anzahl an ionisierbaren Gruppen pro Rückgratmonomer (z), bezogen auf diejenigen Rückgratmonomere, welche keine Seitenketten tragen, ergibt sich:

$$z = \frac{n(Methacrylsäuremonomere) - n(MPEG)}{n(Methacrylsäuremonomere) - n(MPEG)} = 1$$

Die durchschnittliche Anzahl von Seitenkettenmonomeren pro Seitenkette (P) ist
$$P = \frac{M(MPEG)}{M(Ethylenoxid)} = \frac{1000\ g/mol}{44\ g/mol} = 22.7$$

Dies weil die MPEG-Seitenkette hauptsächlich aus Ethylenoxid besteht.

Ein Polymersegment, bestehend aus einer Seitenkette und den zugehörigen Rückgratmonomeren, weist dann folgende Masse [*M(Segment)]* auf:

$$M(Segment) = \frac{1}{n(MPEG)} \cdot \begin{bmatrix} n(Methacrylsäuremonomere) \cdot M(Methacrylsäuremonomere) + \\ n(MPEG) \cdot M(MPEG) \end{bmatrix}$$

$$= \frac{1.0\ mol \cdot 86.1\ g/mol + 0.222\ mol \cdot 1000\ g/mol}{0.222\ mol} = 1388\ g/mol$$

Daraus lässt sich über die mittlere Molekülmasse eines Kammpolymers ($M_n$) die durchschnittliche Anzahl von Seitenketten pro Kammpolymermolekül (*n*) oder die durchschnittliche Anzahl Segmente pro Kammpolymermolekül berechnen:

$$n = \frac{M_n(Kammpolymer\ P2)}{M(Segment)} = \frac{12300\ g/mol}{1388\ g/mol} = 8.9$$

Aus den Parametern *N*, *n*, *P* und *z* lässt sich schliesslich die Strukturkonstante *K* bestimmen:

$$K_{P2} = \frac{[(N-1)z]^2}{nP^{9/5}N^{3/5}} \times 10^5 = \frac{[(4.50-1)\cdot 1]^2}{(8.9 \cdot 22.7)^{9/5} \cdot 4.50^{3/5}} \times 10^5 = 203$$

2.3 Kammpolymere **P3 - P9**

Die entsprechenden Parameter *C/E*, *N, n, P* und *z* der Kammpolymere **P3 - P9** lassen sich anhand der Angaben in den Kapiteln 1.3 - 1.9 und den zugehörigen Molekülmassen aus Tabelle 1 in gleicher Weise berechnen wie bei den Kammpolymeren **P1** bzw. **P2.** Tabelle 1 gibt einen Überblick über die entsprechenden Parameter der Kammpolymere **P3 - P9.**

3. Bindemittel

Für die Testversuche wurde als hydraulisches Bindemittel herkömmlicher Portlandzement CEM I 42.5 N gemäss EN 197-1 mit einer Dichte von 3.1 g/cm$^3$ eingesetzt.
Als puzzolanisches Bindemittel wurde, wo nichts anderes angegeben, Flugasche vom Typ Safament gemäss EN 450 mit einer Dicht von 2.3 g/cm$^3$ verwendet.
Als latenthydraulisches Bindemittel wurde Schlacke vom Typ Löruns gemäss EN 450 verwendet.

4. Herstellung von Bindemittelzusammensetzungen

Bindemittelzusammensetzungen bestehend aus 60 - 80 Gew.-% Zement, 20 - 40 Gew.-% latent hydraulisches oder puzzolanisches Bindemittel (z.B. Flugasche oder Schlacke) wurden mit einem Wasser/Bindemittel-Verhältnis von 0.33 in an sich bekannter Weisen angemacht. Beim Wasser/Bindemittel-Verhältnis beinhaltet das Bindemittel sowohl den Zement als auch das latent hydraulische oder puzzolanische Bindemittel.
Dem Anmachwasser wurde vor der Zugabe zum Bindemittel ein Kammpolymer **KP** und/oder ein basisches Aktivierungsmittel (NaOH, KOH $Na_2CO_3$ oder $Na_2SO_4$) beigemischt. Sofern sowohl ein Kammpolymer **KP** als auch ein basisches Aktivierungsmittel zugemischt wurden, erfolgte die Zugabe des basischen Aktivierungsmittels zum Anmachwasser vor der Zugabe des Kammpolymers **KP.**
Die Dosierung des Kammpolymers wurde so gewählt, dass ohne Zugabe des Aktivierungsmittels ein Ausbreitmass von ca. 180 mm erreicht wurde (vgl. Kapitel 5). Damit werden allfälliger rheologische Abweichungen zwischen verschiedenen Proben ausgeglichen. Konkret wurden die Kammpolymere in einer Dosierung von 0.10 - 0.26 Gew.-%, bezogen auf die Gesamtmasse an Bindemittel (Zement plus latent hydraulisches und puzzolanisches Bindemittel), eingesetzt.

Das Aktivierungsmittel wurde mit einem Anteil von 0.5 - 1 Gew.-%, bezogen auf die Gesamtmasse an Bindemittel (Zement plus latent hydraulisches und puzzolanisches Bindemittel), eingesetzt.

Das Volumen der fertigen Bindemittelzusammensetzungen inklusive dem Anmachwasser und allfälligen Zusätzen (Kammpolymer und/oder Aktivierungsmittel) betrug stets 500 ml.

5. Testverfahren zur Bestimmung des Einflusses der Aktivierungsmittel auf die Kammpolymere

Um die Fliessspannung oder Formänderungsfestigkeit der Bindemittelzusammensetzung zu bestimmen, wurden in einem ersten Schritt Fliesstests zur Bestimmung des Ausbreitmasses der frisch angemachten Bindemittelzusammensetzungen durchgeführt. Dabei wurde ein beidseits offener und auf einer ebenen Glasplatte stehender Hohlzylinder mit einem Volumen von 99 $cm^3$ mit frisch angemachter Bindemittelzusammensetzung gefüllt und in vertikaler Richtung abgezogen. Nach beenden der Ausbreitbewegung, wurde der Durchmesser der zerflossenen Bindemittelzusammensetzung in der Ebene der Glasplatte bzw. in horizontaler Richtung gemessen. Wo nichts anderes angegeben wurden die Messungen ca. 1 min nach dem Anmachen de Bindemittelzusammensetzungen durchgeführt.

Aus dem Volumen V der Bindemittelzusammensetzung, der Dichte $\rho$ (= gewogene Masse der Bindemittelzusammensetzung/Volumen *V*) und dem gemessenen Durchmesser *d* (= 2*R*) wurde die Fliessspannung oder Formänderungsfestigkeit der Bindemittelzusammensetzung gemäss Formel (ii) bestimmt:

$$\tau_0 = \frac{\dfrac{225 \cdot \rho \cdot g \cdot V^2}{128 \cdot \pi^2 \cdot R^5}}{1 + \dfrac{225 \cdot 3^{1/2} \cdot V}{128 \cdot \pi \cdot R^3}} - \frac{\lambda \cdot R^2}{V} \qquad \text{(ii)}$$

Dabei ist *g* die Erdbeschleunigung und $\lambda$ ein für die Testanordnung konstanter Koeffizient, welcher von der Oberflächenspannung und dem Kontaktwinkel der Bindemittelzusammensetzung auf der Testoberfläche abhängt. Im vorliegenden Fall kann mit $\lambda = 0.005$ gerechnet werden. Nähere Angaben zu Formel ii bzw. $\lambda$ finden sich in J. Zimmermann, C. Hampel, C. Kurz, L. Frunz, and R.J. Flatt, "Effect of polymer structure on the sulphate-polycarboxylate competition", Proc. 9th ACI Int. Conf. Superplasticizers and other Chemical Admixtures in Concrete, Editors: T.C. Holland, P.R. Gupta, V.M. Malhotra, American Concrete Institute, Detroit, SP-262-12 (2009), Seiten 165 - 176, sowie in den darin genannten Referenzen.

Um den Einfluss der Aktivierungsmittel auf die Kammpolymere **KP** in den Bindemittelzusammensetzungen zu ermitteln, wurde jeweils die Fliessspannung einer Bindemittelzusammensetzung mit Kammpolymer **KP** aber ohne Aktivierungsmittel bestimmt (als $\tau_{KP}$ bezeichnet) und mit der Fliessspannung einer entsprechenden Bindemittelzusammensetzung mit Kammpolymer **KP** und Aktivierungsmittel (z.B. NaOH) (als $\tau_{OH}$ bezeichnet) verglichen.

Hierfür wurde. Der Koeffizient der relativen Fliessspannungsänderung $\Delta\tau_{rel}$ gemäss Formel (iii) berechnet:

$$\Delta\tau_{rel} = \frac{\tau_{OH} - \tau_{KP}}{\tau_{OH}} \qquad \text{(iii)}$$

Falls $\tau_{OH} >> \tau_{KP}$ KPstrebt $\Delta\tau_{rel}$ gegen 1. In diesem Fall hat das Aktivierungsmittel einen stark negativen Einfluss auf die Wirkung des Kammpolymers **KP.**

Falls jedoch $\tau_{OH} \approx \tau_{KP}$ strebt $\Delta\tau_{rel}$ gegen 0. In diesem Fall beeinträchtigt das Aktivierungsmittel die Wirkung des Kammpolymers **KP** kaum. Wie sich gezeigt hat, ist bevorzugt $\Delta\tau_{rel} < 0.90$, weiter bevorzugt $\Delta\tau_{rel} < 0.75$, noch weiter bevorzugt $\Delta\tau_{rel} < 0.6$.

6. Testversuche

6.1 Eigenschaften verschiedener Kammpolymere in alkalisch aktivierten Bindemittelzusammensetzunaen

Es wurden verschiedene Bindemittelzusammensetzungen mit und ohne Aktivierungsmittel hergestellt. In Tabelle 1 werden die Fliessspannungen $\tau_{KP}$ (ohne Aktivierungsmittel) und $\tau_{OH}$ (mit Aktivierungsmittel) sowie die Fliesspannungsänderungen $\Delta\tau_{rel}$ von Bindemittelzusammensetzungen mit verschiedenen Kammpolymeren **KP** miteinander verglichen. Die verwendeten Bindemittelzusammensetzungen sind bis auf das jeweilig verwendete Kammpolymer **KP** im Wesentlichen identisch und beinhalten als Binderkomponenten 70% Zement und 30% Flugasche. Als Aktivierungsmittel wird NaOH in einer Konzentration von 0.5 Gew.-% eingesetzt.

Tabelle 1

| Polymer | K | C/E | Dosierung [Gew.-%] | $\tau_{KP}$ [Pa] | $\tau_{OH}$ [Pa] | $\Delta\tau_{rel}$ [Pa] |
|---|---|---|---|---|---|---|
| P1 | 241 | 2.8 | 0.13 | 5.2 | 4.5 | -0.16 |
| P2 | 203 | 3.5 | 0.13 | 3.4 | 5.1 | 0.33 |
| P3 | 390 | 4.0 | 0.13 | 6.7 | 11.4 | 0.41 |
| P4 | 152 | 3.0 | 0.11 | 5.4 | 12.1 | 0.55 |
| P5 | 128 | 3.3 | 0.11 | 6.1 | 23.7 | 0.74 |
| P6 | 866 | 7.3 | 0.10 | 1.3 | 9.1 | 0.86 |
| P7 | 53 | 1.7 | 0.22 | 4 | 61 | 0.93 |
| P8 | 52 | 4.6 | 0.11 | 0.8 | 11.1 | 0.93 |
| P9 | 61 | 1.8 | 0.12 | 3.7 | 184.1 | 0.98 |

Die Polymere **P1 - P6** weisen alle einen *K*-Wert > 70 auf und zeigen in den Bindemittelzusammensetzungen Fliessspannungsänderung $\Delta\tau_{rel}$ < 0.90. Solche Polymere vermögen den alkalischen Bedingungen in der Bindemittelzusammensetzung somit wenigstens teilweise zu widerstehen. Besonders gut geeignet sind dabei die Polymere **P1 - P5,** welche $\Delta\tau_{rel}$ < 0.75 ergeben. Noch geeigneter die Polymere **P1 - P4,** welche $\Delta\tau_{rel}$ < 0.6 aufweisen. Wie sich in Praxisversuchen gezeigt hat, lassen sich insbesondere Bindemittelzusammensetzungen $\Delta\tau_{rel}$ < 0.6 problemlos verarbeiten.

Die Polymere **P7 - P9** mit einem *K*-Wert im Bereich von 52 - 61 zeigen in den Bindemittelzusammensetzungen Fliessspannungsänderungen von $\Delta\tau_{rel}$ > 0.90. Entsprechend werden diese Polymere stark durch die Aktivierungsmittel beeinflusst und sind daher schlecht geeignet für alkalisch aktivierte Bindemittelzusammensetzungen.

6.2 Zeitliche Entwicklung der Fliessspannung bei verschiedenen NaOH-Konzentration

In den Fig. 2 - 5 sind die zeitlichen Entwicklungen der Fliessspannungen für die Polymere **P1** (Fig. 2), **P2** (Fig. 3), **P6** (Fig. 4) und **P7** (Fig. 5) grafisch für verschiedene NaOH Konzentrationen dargestellt. Die Fliessspannungen $\tau_{KP}$ (ohne Aktivierungsmittel) und $\tau_{OH}$ (mit Aktivierungsmittel) von Bindemittelzusammensetzungen mit den angegebenen NaOH-Konzentrationen zwischen 0.5 - 1 Gew.-% wurden dabei jeweils nach 30, 60 und 90 min gemessen.

Wie aus den Fig. 2 - 5 zu erkennen ist, sind die Polymere **P1, P2** und **P6** bis zu einer Konzentration von 0.75 Gew.-% Aktivierungsmittel (NaOH) relativ unempfindlich. Auch nach 90 min liegen die Fliessspannungen mit diesen Polymeren im Bereich von höchsten 50 Pa. Im Falle der Polymere **P1** und **P2** bleibt die Fliessspannung sogar weitgehend konstant unterhalb ca. 30 Pa. Besonders bemerkenswert ist Polymer **P1,** bei welchem auch nach 90 min und 0.75 Gew.-% an Aktivierungsmittel die Fliessspannungen zu allen Zeiten konstant unterhalb ca. 15 Pa bleiben. Zudem liegen die Fliessspannungen bei Polymer **P1** sogar mit 1.0 Gew.-% an Aktivierungsmittel über 90 min konstant unterhalb 40 Pa.

Obschon Polymer **P7** ohne Aktivierungsmittel eine gute Verflüssigungswirkung zeigt, steigt die Fliessspannung bereits bei Konzentrationen von 0.5 Gew.-% NaOH über 50 Pa an. Bei 0.75 Gew.-% NaOH liegt sie sogar im Bereich von ca. 250 Pa. Polymer **P7** ist demnach äusserst empfindlich auf das Aktivierungsmittel und daher für alkalisch aktivierte Bindemittelzusammensetzungen kaum geeignet.

6.3 Variation des Flugaschenanteils

Weiter wurden Bindemittelzusammensetzungen mit verschiedenen Flugaschenteilen hergestellt. In Tabelle 2 wird der Einfluss des Flugaschenanteils in der Bindemittelzusammensetzung anhand der Fliessspannungen $\tau_{KP}$, $\tau_{OH}$ und der Fliesspannungsänderungen $\Delta\tau_{rel}$ **für** die beiden Polymere **P1** und **P6** aufgezeigt. Als Aktivierungsmittel wird NaOH in einer Konzentration von 0.5 Gew.-% eingesetzt.

Tabelle 2

| **Polymer** | **Dosierung** [Gew.-%] | **Anteil Flugasche/Zement** [Gew.-%] | $\tau_{KP}$ [Pa] | $\tau_{OH}$ [Pa] | $\Delta\tau_{rel}$ [Pa] |
|---|---|---|---|---|---|
| P1 | 0.13 | 20/80 | 4.5 | 4.1 | -0.10 |
| | 0.13 | 30/70 | 5.2 | 4.5 | -0.16 |
| | 0.13 | 40/60 | 5.1 | 3.7 | -0.38 |
| P6 | 0.26 | 20/80 | 3.9 | 45.6 | 0.92 |
| | 0.22 | 30/70 | 4.0 | 61.0 | 0.93 |
| | 0.22 | 40/60 | 2.4 | 116.8 | 0.98 |

Die Resultate in Tabelle 2 zeigen insbesondere, dass die Flugaschenteile der Bindemittelzusammensetzungen mit Polymer **P1** in weiten Bereichen variiert werden kann, ohne die Wirkung des Polymers signifikant zu beeinträchtigen.

6.4 Variation des Flugaschentyps

Ebenfalls wurden Versuche mit unterschiedlichen Flugaschentypen durchgeführt. Tabelle 3 zeigt einen Vergleich von zwei verschiedenen Flugaschentypen in der Bindemittelzusammensetzung anhand der Fliessspannungen $\tau_{KP}$, $\tau_{OH}$ und der Fliesspannungsänderungen $\Delta\tau_{rel}$ für die beiden Polymere **P1** und **P6.** Als Binderkomponenten wurden 70% Zement und 30% Flugasche vom jeweils angegebenen Typ eingesetzt. Als Aktivierungsmittel wird NaOH in einer Konzentration von 0.5 Gew.-% eingesetzt.

Tabelle 3

| **Polymer** | **Dosierung** [Gew.-%] | **Flugaschentyp** | $\tau_{KP}$ [Pa] | $\tau_{OH}$ [Pa] | $\Delta\tau_{rel}$ [Pa] |
|---|---|---|---|---|---|
| P1 | 0.13 | Safament | 5.2 | 4.5 | -0.16 |
| | | Hydrolment | 3.4 | 3.6 | 0.06 |
| P6 | 0.22 | Safament | 4.0 | 61.0 | 0.93 |
| | | Hydrolment | 2.9 | 49.9 | 0.94 |

Die Resultate für unterschiedliche Flugaschentypen stimmen qualitativ überein.

6.5 Variation des latent hydraulischen Bindemittels

Bei den in Tabelle 4 dargestellten Tests wurde anstelle von Flugasche Schlacke (Typ Löruns) eingesetzt. Dabei wurden die Fliessspannungen $\tau_{KP,}$ $\tau_{OH}$ und die Fliesspannungsänderungen $\Delta\tau_{rel}$ für die beiden Polymere **P1** und **P6** in entsprechenden Bindemittelzusammensetzungen bestimmt. Als Binderkomponenten wurden 70% Zement und 30% Schlacke verwendet. Als Aktivierungsmittel wurde NaOH in einer Konzentration von 0.5 Gew.-% eingesetzt.

Tabelle 4

| **Polymer** | **Dosierung** Gew.-%] | **Anteil Zement/Schlacke** [Gew.-%] | $\tau_{KP}$ [Pa] | $\tau_{OH}$ [Pa] | $\Delta\tau_{rel}$ [Pa] |
|---|---|---|---|---|---|
| P1 | 0.13 | 70/30 | 1.8 | 2.3 | 0.24 |
| P6 | 0.22 | 70/30 | 3.4 | 255.6 | 0.99 |

Die Resultate für das Zement/Schlacke-Bindersystem stimmen qualitativ mit den Resultaten des Zement/Flugasche-Bindersystems überein.

6.6 Variation des Aktivierungsmittels

Des Weiteren wurden Versuche verschiedenen Aktivierungsmitteln durchgeführt. Dabei wurden die Fliessspannungen $\tau_{KP}$, $\tau_{OH}$ *und* die Fliesspannungsänderungen $\Delta\tau_{rel}$ für die beiden Polymere **P1** und **P6** in Bindemittelzusammensetzungen mit 70% Zement und 30% Schlacke und den in Tabelle 5 aufgeführten Aktivierungsmitteln bestimmt. Die Aktivierungsmittel wurden jeweils in einer Konzentration von 0.5 Gew.-% eingesetzt.

Tabelle 5

| **Polymer→ ↓ Aktivator** | | P1 | P6 |
|---|---|---|---|
| - | $\tau_{KP}$ [Pa] | 5.2 | 4.0 |
| NaOH | $\tau_{OH}$ [Pa] | 4.5 | 61.0 |
| | $\Delta\tau_{rel}$ [Pa] | -0.16 | 0.93 |
| KOH | $\tau_{OH}$ [Pa] | 5.5 | 49.9 |
| | $\Delta\tau_{rel}$ [Pa] | 0.04 | 0.92 |
| $Na_2CO_3$ | $\tau_{OH}$ [Pa] | 1.9 | > 304 |
| | $\Delta\tau_{rel}$ [Pa] | -1.8 | 1.0 |
| $Na_2SO_4$ | $\tau_{OH}$ [Pa] | 8.4 | 127.7 |
| | $\Delta\tau_{rel}$ [Pa] | 0.4 | 1.0 |

Tabelle 5 zeigt, dass die Kammpolymere mit unterschiedlichen Aktivierungsmitteln verwendbar sind.

6.7 Kalorimetrische Messungen

Fig. 6 zeigt den zeitlichen Verlauf der relativen Wärmeentwicklung (gemessen bei Zimmertemperatur in einer isolierten Messzelle) von Bindemittelzusammensetzungen enthaltend einen Zement/Flugasche-Binder (i) ohne Zusatzmittelmittel, (ii) mit Dispergiermittel (Kammpolymer **P1**) sowie (iii) mit Dispergiermittel (Kammpolymer **P1**) und verschiedenen Aktivierungsmitteln (NaOH, KOH, $Na_2CO_3$) in den angegebenen Konzentrationen. Die linke Ordinate gibt dabei den Wärmefluss d*Q*/*dt* an, während die rechte Ordinate die kumulative Wärmemenge Q angibt. Als Binderkomponenten wurden 70% Zement und 30% Flugasche verwendet (Wasser/Binder-Verhältnis = 0.33).

Aus Fig. 6 ist erkennbar, dass die Zugabe des Kammpolymers **P1** (ohne Zugabe von Aktivierungsmittel) das Maximum des Wärmeflusses (*dQ*/*dt*) gegenüber einer Bindemittelzusammensetzung ohne Zusatzmittel zu späteren Zeiten verschiebt. Auch die kumulative Wärme nimmt entsprechend langsamer zu. Dies kann dahingehend interpretiert werden, dass die Frühfestigkeit der Bindemittelzusammensetzung mit Dispergiermittel gegenüber der Bindemittelzusammensetzung ohne Zusatzmittel vermindert ist.

Die zusätzliche Zugabe von Aktivierungsmitteln (NaOH, KOH, $Na_2CO_3$) vermag diesen Einfluss des Kammpolymers **P1** bzw. des Dispergiermittels wenigstens teilweise zu reduzieren. Die Maxima der Wärmeflüsse (*dQ*/*dt*) verschieben sich in diesem Fall zu früheren Zeiten. Entsprechend werden mit den Aktivierungsmitteln höhere Frühfestigkeiten erreicht. Wie aus Fig. 6 ersichtlich ist die Verwendung von $Na_2CO_3$ diesbezüglich besonders vorteilhaft.

Fig. 7 zeigt den zeitlichen Verlauf der relativen Wärmeentwicklung (gemessen bei Zimmertemperatur in einer isolierten Messzelle) von Bindemittelzusammensetzungen enthaltend einen Zement/Flugasche-Binder (i) ohne Zusatzmittelmittel, (ii) mit Dispergiermittel (Kammpolymer **P1**) sowie (iii) mit Dispergiermittel (Kammpolymer) und verschiedenen Konzentrationen an Aktivierungsmittel (NaOH). Die linke Ordinate gibt wiederum den Wärmefluss *dQ*/*dt* an, während die rechte Ordinate die kumulative Wärmemenge *Q* angibt. Als Binderkomponenten wurden ebenfalls 70% Zement und 30% Flugasche verwendet (Wasser/Binder-Verhältnis = 0.33).

Die Messungen ohne Zusatzmittel und mit Dispergiermittel (ohne Aktivierungsmittel) entsprechen den bei Fig. 6 erläuterten Messungen. Aus Fig. 7 ist jedoch erkennbar, dass hohe Konzentrationen an Aktivierungsmittel bzw. NaOH in Bezug auf hohe Frühfestigkeiten vorteilhafter sind als geringe Konzentrationen. Es ist davon auszugehen, dass dies auch für andere Aktivierungsmittel gilt.

Kammpolymere, welche hohen Konzentrationen von Aktivierungsmittel widerstehen, sind demnach besonders vorteilhaft.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung eines Kammpolymers **KP** als Dispergiermittel in einer Bindemittelzusammensetzung enthaltend ein alkalisches Aktivierungsmittel, wobei das Aktivierungsmittel insbesondere zur Aktivierung eines latent hydraulischen

und/oder puzzolanischen Bindemittels geeignet ist, und wobei das Kammpolymer **KP** über ein aus mehreren Rückgratmonomeren aufgebautes Polymerrückgrat und mehrere daran gebundene und jeweils aus mehreren Seitenkettenmonomeren aufgebaute polymere Seitenketten verfügt, und wobei wenigstens ein Teil der Rückgratmonomere eine oder mehrere ionisierbare Gruppen aufweist, **dadurch gekennzeichnet, dass** eine Strukturkonstante K des Kammpolymers **KP**, welche definiert ist als

$$K = \frac{[(N-1)z]^2}{nP^{9/5}N^{3/5}} \times 10^5 ,$$

wenigstens gleich 70 ist, wobei

n die durchschnittliche Anzahl von Seitenketten pro Kammpolymermolekül angibt,
N für die durchschnittliche Anzahl von Rückgratmonomeren pro Seitenkette steht und
P die durchschnittliche Anzahl von Seitenkettenmonomeren pro Seitenkette angibt, und
z die durchschnittliche Anzahl an ionisierbaren Gruppen pro Seitenkettenfreiem Rückgratmonomer darstellt.

2. Verwendung nach Anspruch 1, **dadurch gekennzeichnet, dass** die Bindemittelzusammensetzung ein latent hydraulisches und/oder puzzolanisches Bindemittel enthält oder daraus besteht.

3. Verwendung nach Anspruch 2, **dadurch gekennzeichnet, dass** das latent hydraulische und/oder puzzolanische Bindemittel Silicastaub, Flugasche, Puzzolan und/oder Schlacke umfasst.

4. Verwendung nach einem der Ansprüche 2 - 3, **dadurch gekennzeichnet, dass** die Bindemittelzusammensetzung 5 - 95 Gew.-%, insbesondere 15 - 50 Gew.-%, besonders bevorzugt 20 - 40 Gew.-%, an latent hydraulischem und/ oder puzzolanischem Bindemittel, sowie 5 - 95 Gew.-%, bevorzugt 60 - 80 Gew.-%, an hydraulischem Bindemittel, insbesondere Zement, aufweist.

5. Verwendung nach einen der vorangehenden Ansprüche, **dadurch gekennzeichnet, dass** eine Konzentration des Aktivierungsmittels 0.001 - 5 Gew.-%, bevorzugt 0.1 - 1.5 Gew.-%, bezogen auf das Gewicht des Bindemittels, beträgt.

6. Verwendung nach einem der vorangehenden Ansprüche, **dadurch gekennzeichnet, dass** das Aktivierungsmittel ein Alkalimetallhydroxid, Alkalimetallcarbonat und/oder Alkalimetallsulfat umfasst, insbesondere NaOH, KOH, $Na_2CO_3$ und/oder $Na_2SO_4$.

7. Verwendung nach einen der vorangehenden Ansprüche, **dadurch gekennzeichnet, dass** das Polymerrückgrat polymerisierte Acrylsäure-, Methacrylsäure- und/oder Maleinsäureeinheiten beinhaltet oder daraus besteht.

8. Verwendung nach einen der vorangehenden Ansprüche, **dadurch gekennzeichnet, dass** das Polymerrückgrat polymerisierte Vinyl-, Allyl-und/oder Isoprenyletherverbindungen beinhaltet oder daraus besteht.

9. Verwendung nach einem der vorangehenden Ansprüche, **dadurch gekennzeichnet, dass** die polymeren Seitenketten Polyether, insbesondere $C_2$- bis $C_4$-Polyalkylenoxide, umfassen.

10. Verwendung nach einem der vorangehenden Ansprüche, **dadurch gekennzeichnet, dass** die polymeren Seitenketten wenigstens teilweise über eine Ester-, Ether- und/oder Amidgruppe an das Polymerrückgrat gebunden sind.

11. Verwendung nach einem der vorangehenden Ansprüche, **dadurch gekennzeichnet, dass** ein Verhältnis von

a) der durchschnittlichen Gesamtanzahl von freien Säuregruppen, insbesondere COOH-Gruppen, deren Anionen und/oder Salze zu
b) der durchschnittlichen Anzahl an Seitenketten pro Kammpolymermolekül (n),
im Bereich von 2 - 5, insbesondere 3 - 4, liegt.

12. Verwendung nach einem der vorangehenden Ansprüche, **dadurch gekennzeichnet, dass** ein zahlengemitteltes Gesamtgewicht $M_n$ des Kammpolymers **KP** 1’000 - 20’000 g/mol, insbesondere 5’000 - 15’000 g/mol, ist, und/oder

**dadurch gekennzeichnet, dass** ein zahlengemitteltes Gesamtgewicht $M_n$ der Seitenketten 500 - 5'000 g/mol, insbesondere 800 - 3'000 g/mol, weiter bevorzugt 1'000 - 2'000 g/mol, ist.

**13.** Verwendung nach einem der vorangehenden Ansprüche, **dadurch gekennzeichnet, dass** n = 2 - 50, N = 2 - 10 und/oder P = 10 - 100 sind, wobei bevorzugt n = 3 - 10, N = 3 - 6 und/oder P = 20 - 50 sind.

**14.** Verwendung nach einem der vorangehenden Ansprüche, **dadurch gekennzeichnet, dass** das Kammpolymer **KP** folgende Teilstruktureinheiten aufweist oder daraus besteht:

a) $n_1$ Teilstruktureinheiten **S1** der Formel (I):

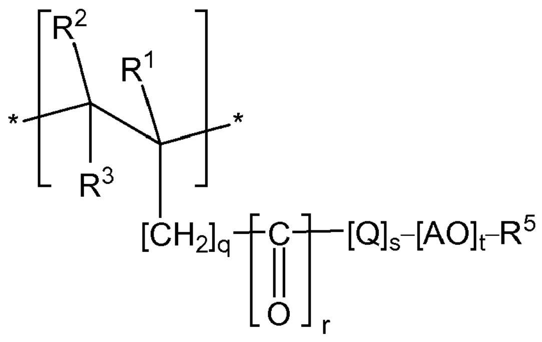

(I)

b) $n_2$ Teilstruktureinheiten S2 der Formel (II):

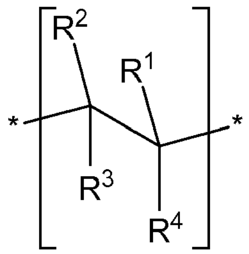

(II)

c) $n_3$ Teilstruktureinheiten **S3** der Formel (III):

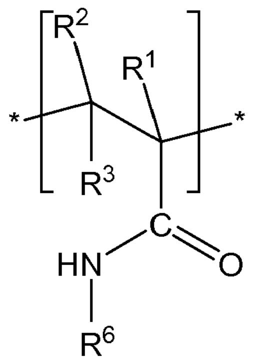

(III)

d) $n_4$ Teilstruktureinheiten **S4** der Formel (IV):

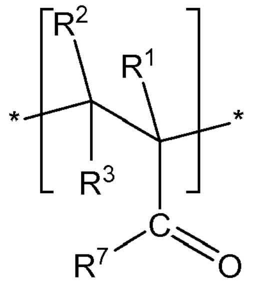

(IV)

e) optional $n_5$ Einheiten wenigstens einer weiteren Struktureinheit **S5**; wobei:

jedes $R^1$, $R^2$ und $R^3$ unabhängig von den anderen für H, COOM, $CH_2COOM$ oder eine Alkylgruppe mit 1 bis 5 Kohlenstoffatomen stehen,
jedes $R^4$ unabhängig von den anderen für -COOM, $-CH_2COOM$, $-SO_2$-OM, -O-PO$(OM)_2$ und/oder -PO $(OM)_2$ steht;
oder wobei $R^3$ mit $R^4$ einen Ring bildet zu -CO-O-CO-;
wobei M für H, ein Alkalimetall, ein Erdalkalimetall, Ammonium, ein Ammoniumkation, eine organische Ammoniumverbindung oder Mischungen davon steht;
und wobei weiter:
q = 0, 1 oder 2 ist;
jedes Q unabhängig von den anderen für -O-, -NH-, und/oder -HC=N-steht,
und s = 0 oder 1 ist;
jedes A unabhängig von den anderen ein $C_2$- bis $C_4$-Alkylen darstellt, mit t = 2 - 300;
jedes $R^5$ unabhängig von den anderen für H, eine $C_1$- bis $C_{20}$-Alkylgruppe, -Cyclohexylgruppe oder -Alkylarylgruppe steht;
jedes $R^6$ unabhängig von den anderen für eine $C_1$- bis $C_{20}$-Alkylgruppe, -Cycloalkylgruppe, -Alkylarylgruppe oder für $-[AO]_t-R^5$ steht,
jedes $R^7$ unabhängig von den anderen für $-NH_2$, $-NR^8R^9$, $-OR^{10}NR^{11}R^{12}$ stehen,
wobei $R^8$ und $R^9$ unabhängig voneinander für
eine $C_1$- bis $C_{20}$-Alkylgruppe, -Cycloalkylgruppe -Alkylaryl¬gruppe oder-Arylgruppe stehen,
oder für eine Hydroxyalkylgruppe oder für eine Acetoxyethyl- ($CH_3$-CO-O-$CH_2$-$CH_2$-) oder eine Hydroxyisopropyl- (HO-CH($CH_3$)-$CH_2$-) oder eine Acetoxyisopropylgruppe ($CH_3$-CO-O-CH($CH_3$)-$CH_2$-) stehen;
oder $R^8$ und $R^9$ bilden zusammen einen Ring, von dem der Stickstoff ein Teil ist, um einen Morpholin- oder Imidazolinring aufzubauen;
$R^{10}$ eine $C_2$ -$C_4$-Alkylengruppe ist,
$R^{11}$ und $R^{12}$ je unabhängig voneinander eine $C_1$- bis $C_{20}$-Alkylgruppe, Cycloalkylgruppe, -Alkylarygruppe, -Arylgruppe oder eine Hydroxyalkylgruppe darstellen,
und wobei $n_1$, $n_2$, $n_3$, $n_4$ und $n_5$ die durchschnittlichen Anzahlen der jeweiligen Teilstruktureinheiten **S1, S2, S3, S4** und **S5** in einem Molekül des Kammpolymers **KP** darstellen, mit

$$n_1/n_2/n_3/n_4/n_5 = (0.1 - 0.9) / (0.1 - 0.9) / (0 - 0.8) / (0 - 0.8) / (0 - 0.8).$$

**15.** Bindemittelzusammensetzung enthaltend ein mineralisches Bindemittel und ein alkalisches Aktivierungsmittel sowie ein wie in einem der vorangehenden Ansprüche definiertes Kammpolymer **KP**, wobei insbesondere zudem ein latent hydraulisches und/oder puzzolanisches Bindemittel enthalten ist.

**16.** Verfahren zur Herstellung einer Bindemittelzusammensetzung nach Anspruch 15, wobei ein mineralisches Bindemittel, insbesondere enthaltend ein latent hydraulisches und/oder puzzolanisches Bindemittel, mit einem Kammpolymer **KP** wie in einem der Ansprüche 1 - 14 definiert und einem alkalischen Aktivierungsmittel vermischt wird.

**17.** Formkörper, erhältlich durch Aushärten einer Bindemittelzusammensetzung gemäss Anspruch 16 nach Zugabe von Wasser.

Tabelle:

| Polymer | Rückgrat | Seitenkette | | Parameter Kammpolymer | | | | | | |
|---|---|---|---|---|---|---|---|---|---|---|
| | | Typ | M [g/mol] | $M_n$ [g/mol] | C/E | n | P | N | z | K |
| P1 | Maleinsäure/Vinylacetat/Allylether-Copolymer | MPEG | 1'100 | 6'600 | 2.8 | 5.1 | 25.0 | 2.8 | 1.5 | 241 |
| P2 | Polymethacrylsäure | MPEG | 1'000 | 12'300 | 3.5 | 8.9 | 22.7 | 4.5 | 1.0 | 203 |
| P3 | Maleinsäure/Allylether-Copolymer | MPEG | 1'100 | 8'600 | 4.0 | 6.5 | 25.0 | 3.0 | 2.0 | 390 |
| P4 | Maleinsäure/Vinylacetat/Allylether-Copolymer | MPEG | 1'100 | 13'500 | 3.0 | 9.3 | 25.0 | 3.0 | 1.5 | 152 |
| P5 | Methacrylsäure/Methacrylsäureester -Copolymer | MPEG | 1'000 | 17'600 | 3.3 | 12.8 | 22.7 | 4.3 | 1.0 | 128 |
| P6 | Polymethacrylsäure | MPEG | 1'000 | 10'800 | 7.3 | 6.3 | 22.7 | 8.3 | 1.0 | 866 |
| P7 | Polymethacrylsäure | MPEG | 1'000 | 13'500 | 1.7 | 11.0 | 22.7 | 2.7 | 1.0 | 53 |
| P8 | Acrylsäure/Methacrylsäure-Copolymer (1:1) | MPEG | 3'000 | 24'500 | 4.6 | 7.1 | 68.2 | 5.6 | 1.0 | 52 |
| P9 | Polymethacrylsäure | MPEG | 1'000 | 12'600 | 1.8 | 10.2 | 22.7 | 2.8 | 1.0 | 61 |

**Fig. 1**

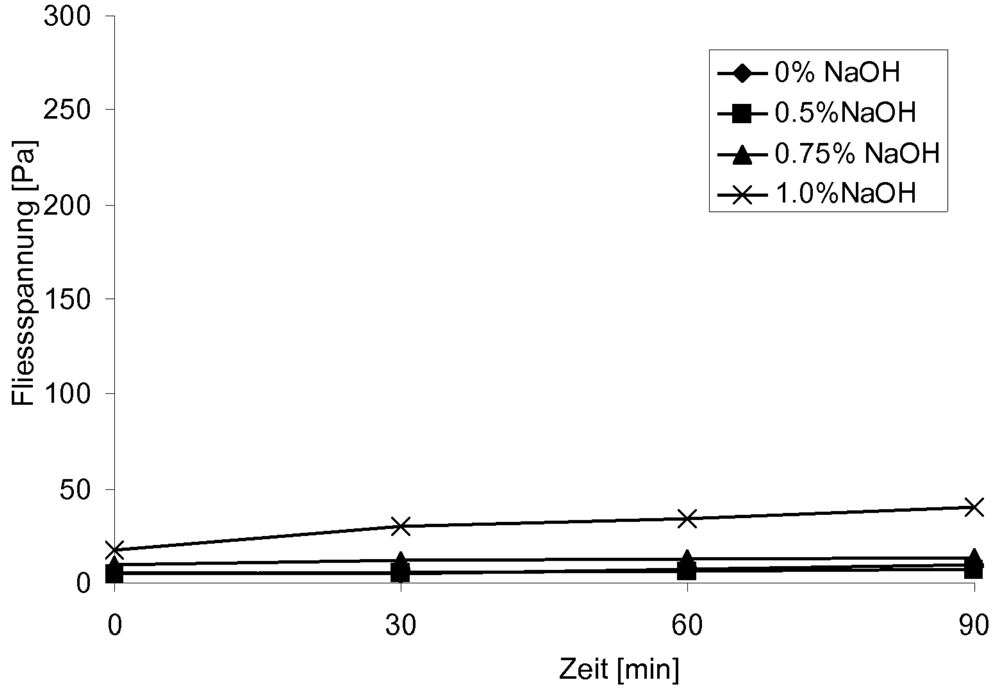
300
250
200
150
100
50
0
Fliessspannung [Pa]
0% NaOH
0.5%NaOH
0.75% NaOH
1.0%NaOH
0
30
60
90
Zeit [min]

**Fig. 2**

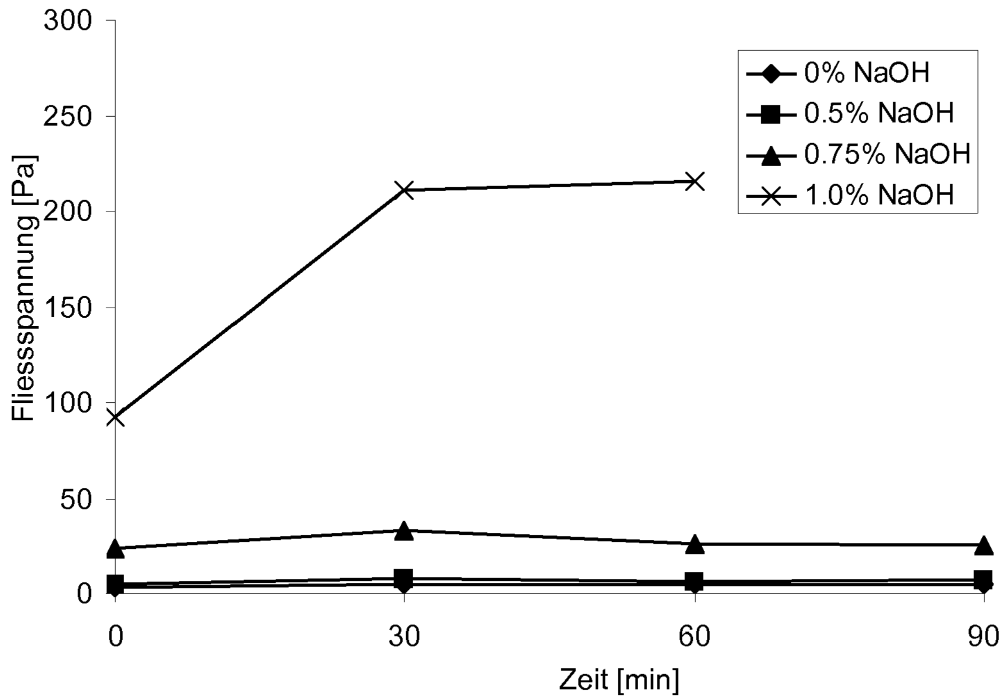
300
250
200
150
100
50
0
Fliessspannung [Pa]
0% NaOH
0.5% NaOH
0.75% NaOH
1.0% NaOH
0
30
60
90
Zeit [min]

**Fig. 3**

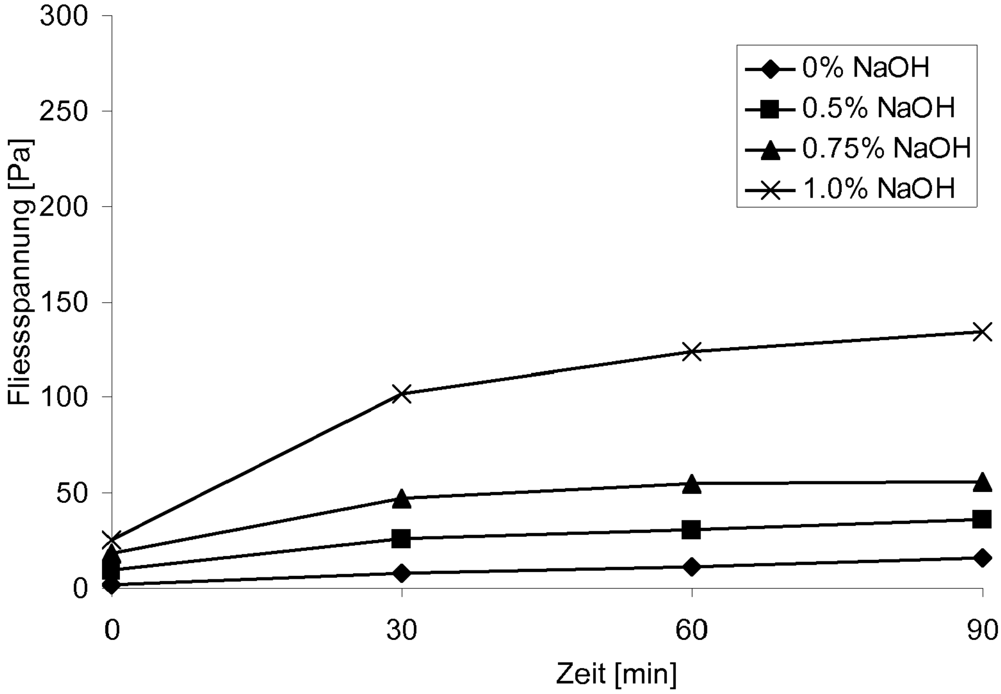
300
250
200
150
100
50
0
Fliessspannung [Pa]
0
30
60
90
Zeit [min]
0% NaOH
0.5% NaOH
0.75% NaOH
1.0% NaOH

**Fig. 4**

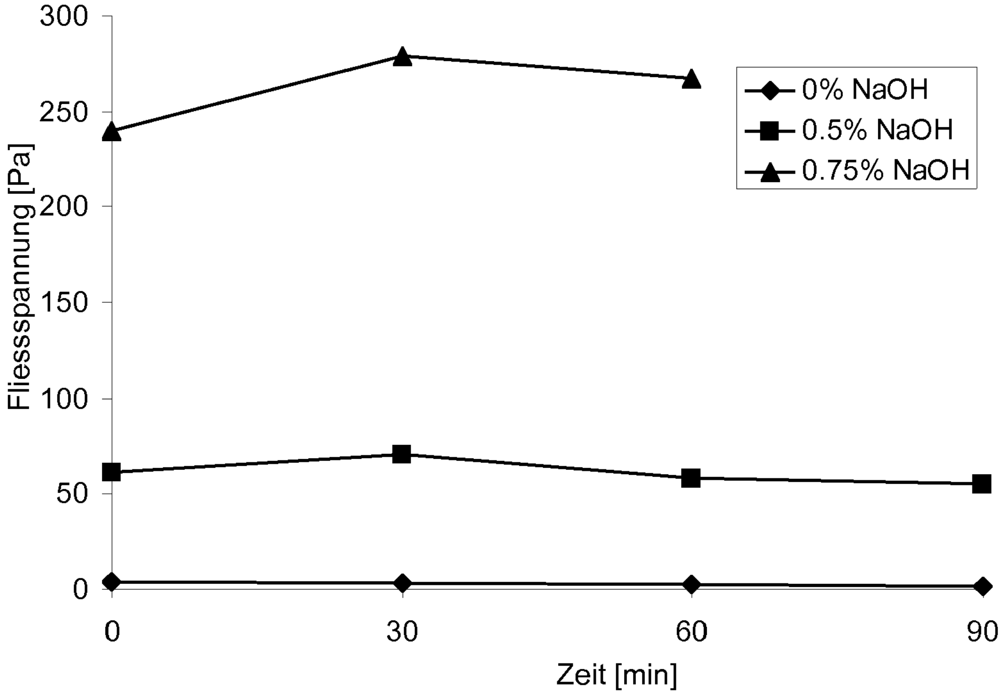
300
250
200
150
100
50
0
Fliessspannung [Pa]
0
30
60
90
Zeit [min]
0% NaOH
0.5% NaOH
0.75% NaOH

**Fig. 5**

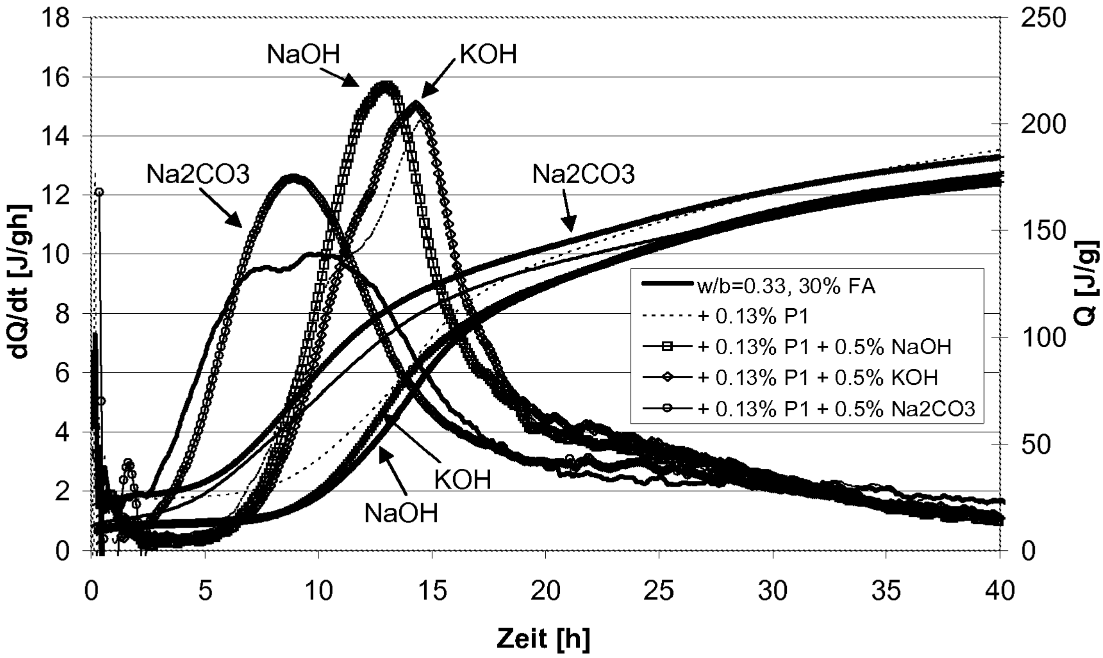
NaOH
KOH
Na2CO3
Na2CO3
KOH
NaOH
dQ/dt [J/gh]
Q [J/g]
Zeit [h]
w/b=0.33, 30% FA
+ 0.13% P1
+ 0.13% P1 + 0.5% NaOH
+ 0.13% P1 + 0.5% KOH
+ 0.13% P1 + 0.5% Na2CO3

Fig. 6

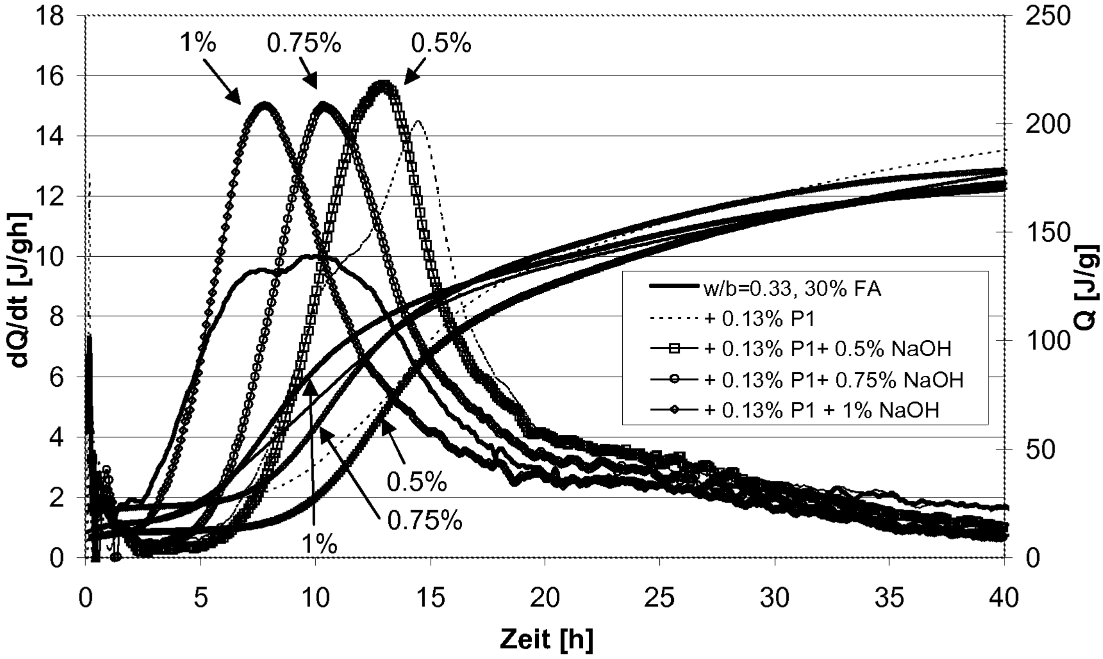
1%
0.75%
0.5%
0.5%
0.75%
1%
dQ/dt [J/gh]
Q [J/g]
Zeit [h]
w/b=0.33, 30% FA
+ 0.13% P1
+ 0.13% P1+ 0.5% NaOH
+ 0.13% P1+ 0.75% NaOH
+ 0.13% P1 + 1% NaOH

Fig. 7

Europäisches Patentamt
European Patent Office
Office européen des brevets

# EUROPÄISCHER RECHERCHENBERICHT

Nummer der Anmeldung
EP 11 17 0375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 061153 A1 (CONSTR RES & TECH GMBH [DE]) 28. Juni 2007 (2007-06-28)<br>* Seite 11; Beispiele V-1 *<br>----- | 1-17 | INV.<br>C08F216/14<br>C08F220/06<br>C08F222/06<br>C04B24/26<br>C08F220/36<br>C07C57/00 |
| X | WO 2010/029117 A2 (CONSTR RES & TECH GMBH [DE]; LORENZ KLAUS [DE]; KRAUS ALEXANDER [DE];) 18. März 2010 (2010-03-18)<br>* Seite 14; Beispiel A *<br>* Seite 7, Zeile 35 *<br>----- | 1-17 | |
| | | | RECHERCHIERTE SACHGEBIETE (IPC) |
| | | | C08F<br>C04B<br>C07C |

Der vorliegende Recherchenbericht wurde für alle Patentansprüche erstellt

| Recherchenort | Abschlußdatum der Recherche | Prüfer |
|---|---|---|
| Den Haag | 29. März 2012 | Friederich, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 17 0375

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-03-2012

| Im Recherchenbericht angeführtes Patentdokument | Datum der Veröffentlichung | Mitglied(er) der Patentfamilie | Datum der Veröffentlichung |
|---|---|---|---|
| DE 102005061153 A1 | 28-06-2007 | AU 2006332146 A1 | 12-07-2007 |
| | | BR PI0620173 A2 | 01-11-2011 |
| | | CA 2628740 A1 | 12-07-2007 |
| | | CN 101341180 A | 07-01-2009 |
| | | DE 102005061153 A1 | 28-06-2007 |
| | | EP 1966258 A1 | 10-09-2008 |
| | | JP 2009520843 A | 28-05-2009 |
| | | KR 20080084973 A | 22-09-2008 |
| | | US 2009163622 A1 | 25-06-2009 |
| | | WO 2007076941 A1 | 12-07-2007 |
| WO 2010029117 A2 | 18-03-2010 | AU 2009290847 A1 | 18-03-2010 |
| | | CA 2736307 A1 | 18-03-2010 |
| | | CN 102149737 A | 10-08-2011 |
| | | EP 2334708 A2 | 22-06-2011 |
| | | US 2011166261 A1 | 07-07-2011 |
| | | WO 2010029117 A2 | 18-03-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1138697 A1, Sika AG
- WO 03080714 A


### In der Beschreibung aufgeführte Nicht-Patentliteratur


- The role of adsorption energy in the sulphate-polycarboxylate competition. **FLATT R.J. ; ZIMMERMANN J. ; HAMPEL C. ; KURZ C. ; SCHOBER I. ; PLASSARD C. ; LESNIEWSKA E.** Proc. 9th ACI Int. Conf. Superplasticizers and Other Chemical Admixtures in Concrete. American Concrete Institute, 2009, 153-164
- Effect of polymer structure on the sulphate-polycarboxylate competition. **J. ZIMMERMANN ; C. HAMPEL ; C. KURZ ; L. FRUNZ ; R.J. FLATT.** Proc. 9th ACI Int. Conf. Superplasticizers and other Chemical Admixtures in Concrete. 2009, 165-176